# EUROPEAN PATENT SPECIFICATION

(11) **EP 1 209 822 B1**
(45) Date of publication and mention of the grant of the patent: **10.01.2007**
(21) Application number: 01126434.8
(22) Date of filing: 08.11.2001
(51) Int. Cl.: H04B 7/185, G06Q 30/00

(54) **Method for provision of program and broadcasting system and server**
Verfahren zur Bereitstellung eines Programs und Anordnung und Server zum Rundfunk
Méthode de provision de programme et système et serveur pour diffusion

(30) Priority: 27.11.2000 JP 2000360282
(43) Date of publication of application: 29.05.2002
(73) Proprietor: NTT DoCoMo, Inc., Tokyo 100-6150 (JP)
(72) Inventor: Nagaoka, Tatsuji, Sapporo-shi, Hokkaido 002-8072 (JP); Yonekura, Toshinori, Warabi-shi, Saitama 335-0005 (JP); Nomura, Kazuo, Tokyo 146-0083 (JP); Hiruma, Yutaka, Tokyo 176-0001 (JP)
(74) Representative: HOFFMANN EITLE

(56) References cited:
- EP-A- 0 342 295
- WO-A-00/22907
- WO-A-00/30354
- WO-A-92/15174
- US-A- 5 898 762

## Description

### TECHNICAL FIELD OF THE INVENTION

The present invention relates to a method of providing a program according to the preamble of claim 1, a related broadcasting system according to the preamble of claim 16, and a related server operation with a broadcasting station according to the preamble of claim 17.

### PRIOR ART

In EP 0 342 295 A2, there is described an interactive call-handling in which calls from a multiplicity of terminals of a communication system are received at a receiving station, automated voice responses to the calls are made from the receiving station to the calling terminals prompting the callers to transmit digital-signal data to the receiving station via the communication system, and digital signal data transmitted via the communication system by the individual callers in response to the voice received at the receiving station. The digital signal data received at the receiving station in respect of each individual call of a plurality of such calls is stored in relationship with other digital signal data received or otherwise derived at the receiving station in respect of that individual call. At this part of the data stored in respect to each of the plurality of calls is for qualifying the caller in regard to the performance of a predetermined function for which the performance and/or outcome is dependent upon at least part of the data stored.

An auction program has been broadcast as a viewer participation television program. Participation of viewers in such an auction program has required the viewers to send in postcards applying for participation to the television station in advance. Then drawing viewers from the application postcards sent from the viewers is made, and only the selected viewers can participate in the program. These selected participants were then asked to come in to the broadcast station on the day of recording the program to stage the viewer participation type auction program.

On the other hand, in quiz shows and other television programs, sometimes telephone numbers are announced during the television program for viewer response to questions in the quiz and the viewers call in answers over those telephone numbers.

In such conventional viewer participation type auction programs, the viewers had to personally come into the recording location to participate. Therefore, there often could be cases where some viewers could not participate due to geographic constraints or time constraints. Further, even viewers meeting the right conditions could not obtain the chance of participating in the program if not being selected in the drawing. Therefore, while they are called viewer participation type programs, there has been the problem that only a very limited number of viewers were able to actually participate.

As opposed to this, when using the method of having viewers call in answers over telephone numbers announced during the program, participation in the program of viewers spread over a wide region becomes possible. When using this method for a television program involving commercial transactions such as an auction program, however, because it takes time to verify the identity of the viewers to ensure the legitimacy of the transactions, it was extremely difficult to secure a real time feeling in the programs.

### SUMMARY OF THE INVENTION

The present invention was made in consideration of the above situation and has its object to provide a method for provision of a program enabling a large number of widely dispersed viewers to participate in a program while maintaining a real time feeling in the program and a broadcast system and server for the same.

To solve the problems explained above, one aspect of the present invention provides a method of provision of a program having the features of claim 1.

Another aspect of the present invention provides a broadcasting system having the features of claim 16.

Yet another aspect of the present invention provides a server obtaining a broadcast data from a broadcast station and distributing it to a plurality of communication terminals having the features of claim 17.

### BRIEF DESCRIPTION OF THE DRAWINGS

FIG. 1 is a view of the configuration of a broadcasting system according to an embodiment of the present invention.
FIG. 2 is a view of an example of an image displayed on a display device connected to an STB 4 according to the present embodiment.
FIG. 3 is a view of the configuration of a broadcast station 2 according to the present embodiment.
FIG. 4 is a view of the stored content of a program DB 23 according to the present embodiment.
FIG. 5 is a view of the content of a broadcast management table TBL1 according to the present embodiment.
FIG. 6 is a view of the content of a bid table TBL2 according to the present embodiment.
FIG. 7 is a view of the configuration of a TMS 3 according to the present embodiment.
FIG. 8 is a view of the content of a program management table TBL3 according to the present embodiment.
FIG. 9 is a view of the content of a participant management table TBL4 according to the present embodiment.
FIG. 10 is a view of the content of an input price table according to the present embodiment.
FIG. 11 is a view of the stored content of a customer management DB 35 according to the present embodiment.
FIG. 12 is a flow chart of the processing performed in a broadcast management server 21 according to the present embodiment.
FIG. 13 is a view of a sequence in the broadcasting system according to the present embodiment.
FIG. 14 is a view of a sequence in the broadcasting system according to the present embodiment.
FIG. 15 is a view of an example of an image displayed on a liquid crystal display of a mobile phone 1 in the present embodiment.
FIG. 16 is a view of an example of an image displayed on a liquid crystal display of a mobile phone 1 in the present embodiment.
FIG. 17 is a view of an example of an image displayed on a liquid crystal display of a mobile phone 1 in the present embodiment.
FIG. 18 is a view of an example of an image displayed on a liquid crystal display of a mobile phone 1 in the present embodiment.
FIG. 19 is a view of an example of an image displayed on a liquid crystal display of a mobile phone 1 in the present embodiment.
FIG. 20 is a flow chart of the processing performed in a broadcast management server 21 according to a first modification.
FIG. 21 is a view of the content of the broadcast management table TBL1 according to a second modification.
FIG. 22 is a view of the configuration of a broadcasting system according to a fourth modification.

### DESCRIPTION OF THE PREFERRED EMBODIMENT

### 1. First Embodiment

### 1.1 Configuration of First Embodiment

### (A) Configuration of System as a Whole

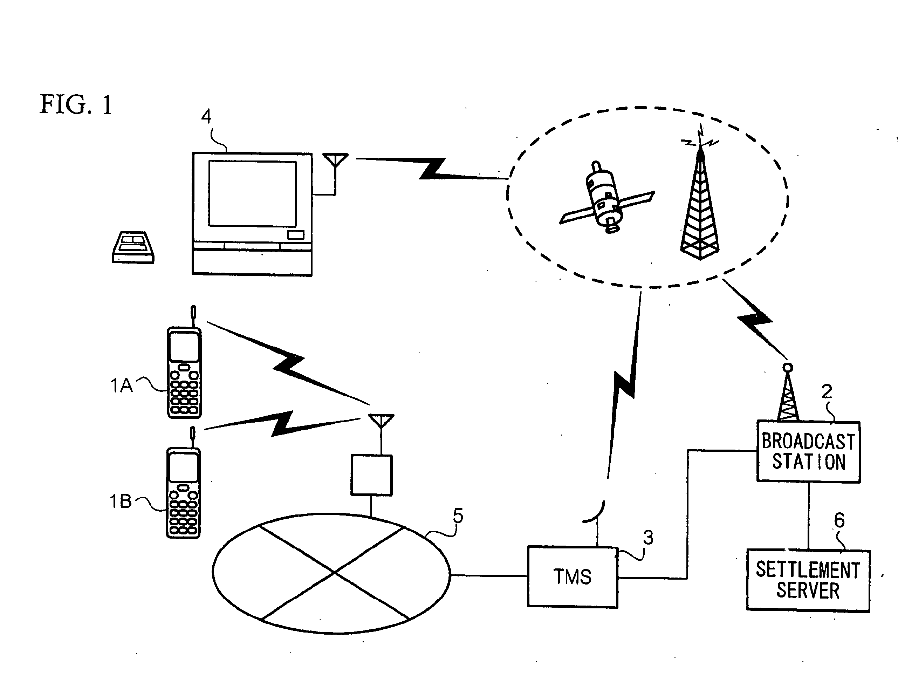

FIG. 1 is a view of the configuration of a broadcasting system according to the present embodiment.

As shown in the figure, the broadcasting system of the present embodiment comprises a plurality of mobile phones 1A, 1B,... (hereinafter unless requiring particular identification, referred to as the "mobile phones 1"), a broadcast station 2, a transaction management system 3 (hereinafter referred to as the "TMS 3"), a plurality of set top boxes 4 (hereinafter referred to the "STBs 4"), a mobile packet communication network 5, and a settlement server 6. Note that in FIG. 1, to avoid complication of the illustration, only two mobile phones and one STBs 4 among the plurality of mobile phones 1 and STBs 4 are shown.

The broadcasting system of the present embodiment is one for realizing a program participation service enabling users of the mobile phones 1 to participate in an auction program broadcast by the broadcast station 2. The facilities for realizing such a service will be explained next.

The broadcast station pre-records an auction program (hereinafter simply referred to as a "program") and broadcasts the pre-recorded program by a terrestrial digital broadcast or a satellite digital broadcast. Here, the broadcast data broadcast from the broadcast station 2 includes the following two types of data plus electrical program guide (EPG) data multiplexed together.

### a. Program Data

This data is the programs recorded in advance for the broadcast at the broadcast station 2. Here, each program broadcast by the broadcast station 2 is set with a program code for identifying the program. The program data is identified by the program code. Note that the images by this program data may be stationary images or moving images.

### b. Report Information Data

This data is the various information to be reported to the viewers of a program in the progress of the program (for example, text indicating the current bid in a program) and is updated based on various conditions in the process of broadcasting of the program.

Note that below, when the term "program" is referred to alone, it means a service provided to the user by the program data and the report information data. That is, a "program" is defined as a service providing the user with images introducing products obtained by interpretation of the program data and with text and other information able to be recognized by a user obtained by interpretation of the report information data. Note that the "broadcast data" described in the claims includes this program data and report information data.

An STB 4 receives the broadcast data broadcast by the broadcast station 2 and demultiplexes and demodulates the broadcast data, then provides to a television receiver, liquid crystal display, or other display device. As a result, the display device displays images of the program data included in the broadcast data and various information (text etc.) of the report information data included in the broadcast data. Note that the STB 4 may be built into a television receiver or may be provided separately from the television receiver.

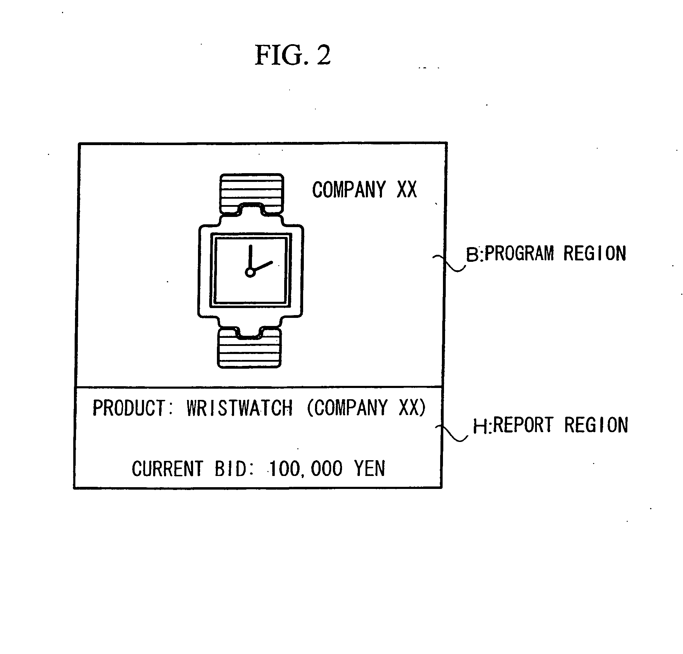

FIG. 2 is a view of an example of an image displayed on a display device connected to the STB 4 when receiving broadcast data broadcast from the broadcast station 2. As shown in this figure, the display device connected to the STB 4 displays an image divided into two regions. Here, the program data included in the broadcast data received by the STB 4 is displayed in the program region B, while the report information data is displayed in the report region H.

Further, the STB 4 has an operating unit (not shown) for various input operations. By operating this operating unit, it is possible to display an image by the EPG data broadcast multiplexed with the broadcast data on the display device. This EPG data includes the above mentioned program code. A user can operate this operating unit to view an image of the EPG data received by the STB 4 and thereby see the program code of the program.

The TMS 3 receives the broadcast data broadcast by the broadcast station 2, converts the broadcast data to a format of data interpretable by the mobile phones 1, and distributes it to the mobile phones 1. The TMS 3 divides the received broadcast data into the program data, report information data, and EPG data, and converts the formats of the data to obtain the following two types of data:

### c. Mobile Unit Broadcast Data

This data is obtained by converting the program data and report information data in the broadcast data to enable mobile telephone to display on its display which usually has limited resolution. Although there is a difference in resolution between the displays of STB 4 and mobile phone 1, the contents displayed on their displays are same. When this mobile unit broadcast data is distributed to the mobile phones 1, the mobile phones 1 display images similar to that shown in FIG. 2.

### d. Mobile Unit EPG Data

This data is obtained from the EPG data included in the broadcast data and introduces the program being broadcast to the users of the mobile phones 1. The mobile unit EPG data includes a program code of the program.

The mobile phones 1 have input units for the users to input instructions and liquid crystal displays for displaying images in the same way as conventional mobile phones and have the function of packet exchange through the mobile packet communication network 5.

The mobile phones 1 also have memories (not shown) . These memories store sender IDs for identifying the mobile phones 1 in the mobile packet communication network 5, various types of control programs, and also program distribution applications for data communication with the TMS 3 through the mobile packet communication network 5 and for receiving the program participation service. The mobile phones 1 can execute the program distribution applications to receive the mobile unit EPG data and mobile unit broadcast data from the TMS 3 through the mobile packet communication network 5 and display the images on the liquid crystal displays. At this time, the liquid crystal displays of the mobile phones 1 display images divided into the program region B and report region H in the same way as shown in FIG. 2.

Further, to execute the program distribution applications and enable the users of the mobile phones 1 to receive the program participation service (that is, for the users to participate in the program), it is necessary to prompt the users of the mobile phones 1 to input bids and other information required for the progress of the program and to transmit the information input by the users to the TMS 3. Therefore, in this embodiment, the TMS 3 distributes individual additional data prompting users to input information required for the progress of the program (for example, bids and other information) to the mobile phones 1 of the users receiving the service. Note that this individual additional data corresponds to the "input prompting data", "participation prompting data", and "winning bid information" in the claims.

This individual additional data is transmitted by the broadcast station 2 to the TMS 3 before the broadcast of each program and is unique to each program. Further, this individual additional data is sometimes distributed to all of the mobile phones 1 of the users participating in the program and sometimes distributed to only some of the mobile phones 1. For example, data of text merely prompting the users of the mobile phones 1 to input bids such as "INPUT BID" or text inviting participation such as "PARTICIPATE IN AUCTION?" is distributed to all mobile phones 1, while data of text such as "YOU WON" is distributed to only the mobile phone 1 of the user winning the product.

This individual additional data is sent to the mobile phone 1 via the broadcast station 2 and the TMS 3. On the other hand, the individual additional data is not sent to STB 4. Hence, display of the STB 4 does not produce image which originates from the individual additional data. That is, shown on the display of the TMS 3 is only a product based on the program data and a current bid based on the report information data.

However, by seeing the displayed image of the STB 4, a viewer can grasp the current situation of auction and therefore may be interested in the auction.

On the other hand, the displayed image of the mobile phone 1 which is given the individual additional data includes information such as "participate in auction?" in addition to a product and current bid.

Then the intrigued viewer can participate in the auction program by using only mobile phone 1. That is without seeing the displayed image of the STB 4.

When distributed the individual application data, the liquid crystal displays of the mobile phones 1 display the images as shown in FIG. 2 and images by the individual additional data (text etc.) Note that the images displayed at the mobile phones 1 receiving mobile unit broadcast data with such individual additional data will be explained in detail later.

When the users of the mobile phones 1 input various information (that is, bids or other information required for progress of the program) into the input units in the state with images by the individual additional data displayed, the mobile phones 1 transmit the data of the information to the TMS 3. The data transmitted from the mobile phones 1 in this way is transmitted from the TMS 3 to the broadcast station 2. The broadcast station 2 updates the report information data based on the data transmitted from the TMS 3. As a result, the image displayed in the report region H (that is, the text "CURRENT BID: 100,000 yen") of the displays of the STBs 4 or liquid crystal displays of the mobile phones 1 receiving the updated report information changes.

The settlement server 6 is installed in a credit card company, bank, or other settlement organization and takes care of the financial settlement when a user of a mobile phone 1 wins a product in the program.

The mobile packet communication network 5 communicates with the mobile phones 1 through a base station to provide a packet exchange service to the mobile phones 1. Note that while not shown in FIG. 1, the mobile packet communication network 5 has a packet subscriber processor etc.

### (B) Configuration of Broadcast Station 2

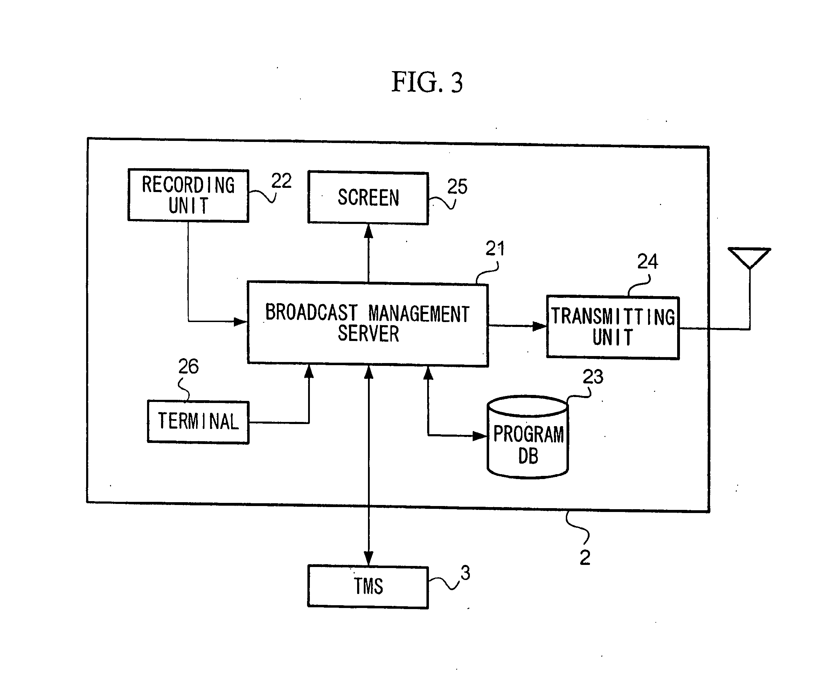

FIG. 3 is a view of the configuration of the broadcast station 2.

As illustrated, in the present embodiment, the broadcast station 2 comprises a broadcast management server 21, a recording unit 22, a program database 23 (hereinafter "database" being abbreviated as "DB"), a transmission unit 24, a screen 25, and a terminal 26.

Here, the screen 25 is a large size screen provided in a recording studio and displays various information under the control of the broadcast management server 21. It is possible to record a program while people in the program to be recorded at the broadcast station 2 is viewing the image shown on the screen.

The recording unit 22 is comprised of a camera and microphone installed in the recording studio and an editing console for editing the images and sound recorded by the camera and microphone. The recording unit 22 records the program to be broadcast, edits the content of the recorded program, and generates the program data. The recording unit 22 supplies the generated program data to the broadcast management server 21 in this way.

The terminal 26 is a personal computer or other device connected to the broadcast management server 21 and has a keyboard, mouse, display, etc. (all not shown) . This terminal 26 generates individual additional data of the input operation of the program production staff of the broadcast station 2. Further, the terminal 26 generates data for the formatting of the report information data based on the input operation of the program production staff of the broadcast station 2 and supplies it to the broadcast management server 21. The broadcast management server 21 generates the report information data based on the format supplied from the terminal 26 and updates the report information data based on the information transmitted from the TMS 3.

The broadcast management server 21 stores in the program DB 23 the program data supplied from the recording unit 22 and the individual additional data supplied from the terminal 26. The broadcast management server 21 also broadcasts program data stored into the program DB 23 with the report information data etc. multiplexed.

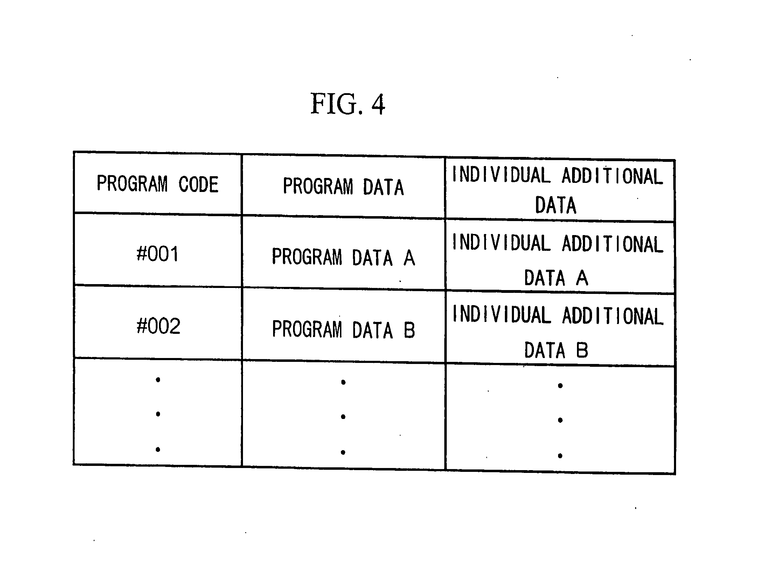

FIG. 4 is a view of the stored content of the program DB 23. As illustrated, the program DB 23 stores the program data of the programs corresponding to program codes and individual additional data linked with the program codes of the programs (that is, the program data). Note that while not particularly shown in FIG. 4, the data for formatting the report information data generated in the terminal 26 may also be stored linked with the program codes in the program DB 23.

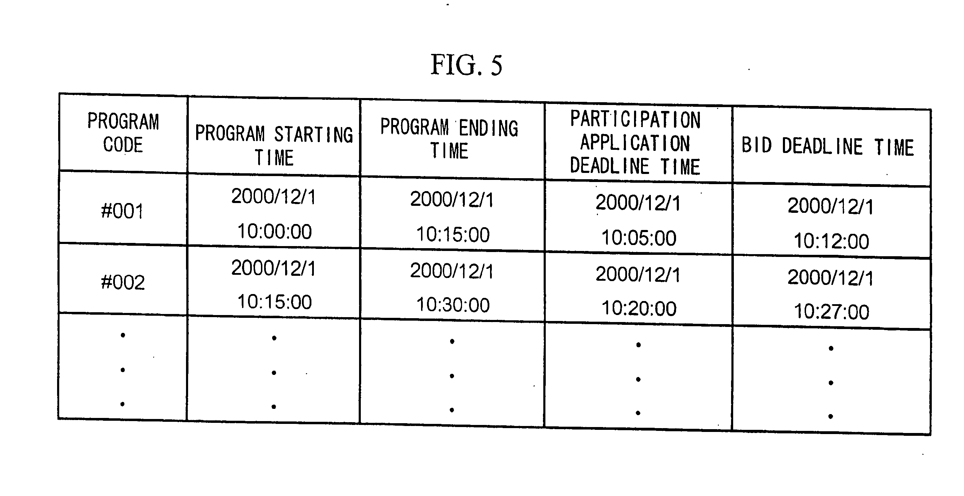

Further, the broadcast management server 21 has a storage unit (not shown). This storage unit stores a broadcast management table TBL1 for managing the broadcasts of the programs. FIG. 5 is a view of the content of this broadcast management TBL1. As illustrated, this broadcast management table TBL1 stores, linked with program codes, program starting time information showing the starting times of broadcasts of programs indicated by the program codes, program ending time information showing the ending times of broadcasts, participation application deadline time information showing the deadline time for applications for participation in program from mobile phones 1, and bid deadline time information showing the deadline time for bids in the programs linked together. The broadcast management server 21 manages the broadcast times of the programs based on the information stored in the broadcast management table TBL1.

Further, the information stored in the broadcast management table TBL1 is transmitted by the broadcast management server 21 to the TMS 3 before the broadcast of the programs of that information. The TMS 3 executes various processing based on the information transmitted from the broadcast management server 21. For example, the TMS 3 accepts only applications for participation in a program received from mobile phones 1 before the time of the participation application deadline time information and does not accept applications for participation received from mobile phones 1 after that time has passed.

When reaching a time which is a predetermined length before the starting time of the broadcast of the program, the broadcast management server 21 generates in the storage unit a bid table TBL2 with the program code of the program.

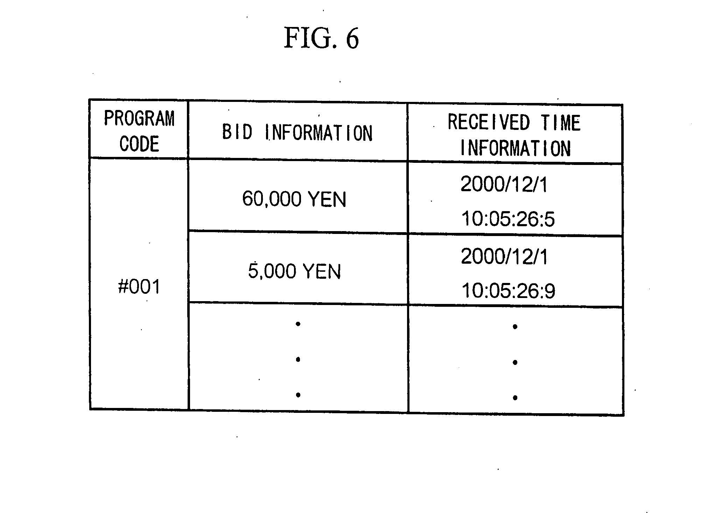

FIG. 6 is a view of the content of the bid table TBL2. Note that the bid table TBL2 shown in the figure is shown as a table of the program code "#001". As shown in the figure, the bid table TBL2 stores the bid information transmitted from the TMS 3 and received time information of the bid information. Here, the bid information is information of a bit input by a user of a mobile phone 1 in the input unit of the mobile phone 1 as a winning bid of the product put up for auction in the program.

When a user inputs a bid in the mobile phone 1, bid information is transmitted to the TMS 3. The TMS 3 calculates the time of reception of the input bid information transmitted from the mobile phone 1. The TMS 3 stores the received time information calculated in this way and the input bid information in its own storage unit and transfers the information to the broadcast management server 21 of the broadcast station 2. The input bid information and received time information transferred from the TMS 3 in this way are stored in the bit table TBL2. Note that the operations of the TMS 3 and broadcast management server 21 at this time will be explained in detail later.

### (C) Configuration of TMS 3

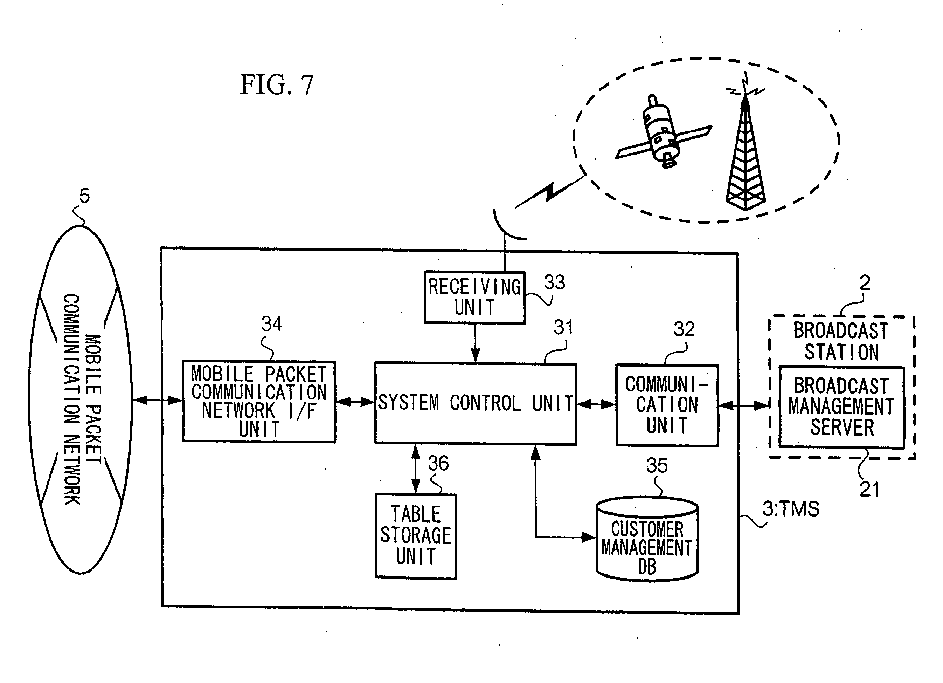

FIG. 7 is a view of the configuration of the TMS 3 according to the present embodiment. As shown in the figure, the TMS 3 according to the present embodiment is comprised of a system control unit 31, a communication unit 32, a receiving unit 33, a mobile packet communication network interface unit (hereinafter this "interface" being abbreviated as "I/F") 34, a customer management DB 35, and a table storage unit 36.

The communication unit 32 is connected with the broadcast management server 21 of the broadcast station 2 by a dedicated line and handles the transfer of data between the system control unit 31 and broadcast management server 21. Specifically, the communication unit 32 supplies a signal supplied from the system control unit 31 to the broadcast management server 21 and supplies the data transmitted from the broadcast management server 21 to the system control unit 31. Due to the data communication through the communication unit 32, the system control unit 31 of the TMS 3 receives the individual additional data and program codes of the programs and the various information stored in the broadcast management table TBL1 (program starting time information etc.) from the broadcast management server 21. Note that in the present embodiment, the TMS 3 and broadcast management server 21 are configured to communicate through a dedicated line, but the present invention is not limited to this. It is of course possible to communication through the mobile packet communication network 5 or another public network.

The receiving unit 33 demodulates the broadcast data from the signal received by an antenna of the receiving unit 33. Further, it supplies the demodulated broadcast data to the system control unit 31. The mobile packet communication network I/F unit 34 handles the transfer of data between the mobile packet communication network 5 and the system control unit 31.

The system control unit 31 is comprised of for example a CPU (central processing unit), a ROM (read only memory), a RAM (random access memory), and a hard disk drive (not shown) and controls the parts of the TMS 3. The ROM stores various types of control applications for controlling the parts of the TMS 3. The CPU executes various processing by executing the applications stored in the ROM or the hard disk drive. The RAM is used as a work area of the CPU and used for temporarily holding the received data.

The hard disk drive stores a conversion application for converting the broadcast data received through the receiving unit 33 to mobile unit broadcast data which is able to be interpreted by the mobile phones 1 and a service provision application for providing the program participation service to the mobile phones 1. Here, the conversion application includes an algorithm for converting the compression format of the broadcast data to a compression format of mobile unit broadcast data and an algorithm for converting the data programming language of the broadcast data to language of the mobile unit broadcast data. Further, the application includes an algorithm for converting the size of the image etc. of the broadcast data to meet with the image displaying capability of the mobile phones 1. Therefore, when the broadcast data is converted to mobile unit broadcast data or mobile unit EPG data, the data is converted in accordance with these algorithms.

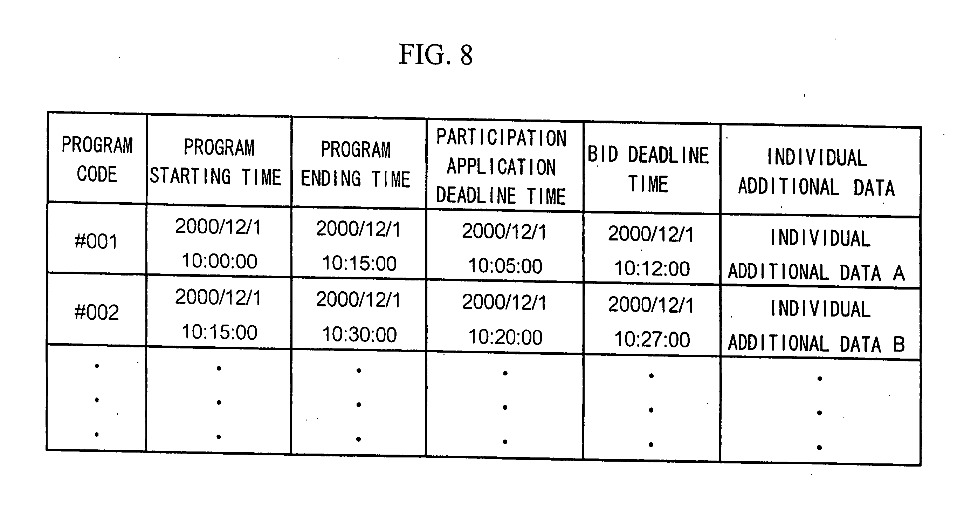

The table storage unit 36 stores a program management table TBL3 shown in FIG. 8. The table TBL3 stores the various information transmitted by the broadcast management server 21 before the broadcast of the programs (for example, the individual additional data and the various information stored in the broadcast management table TBL2). Therefore, the program management table TBL3 is set with fields for storing the program starting time information, program ending time information, participation application deadline time information, bid deadline time information, and individual additional data of the program codes.

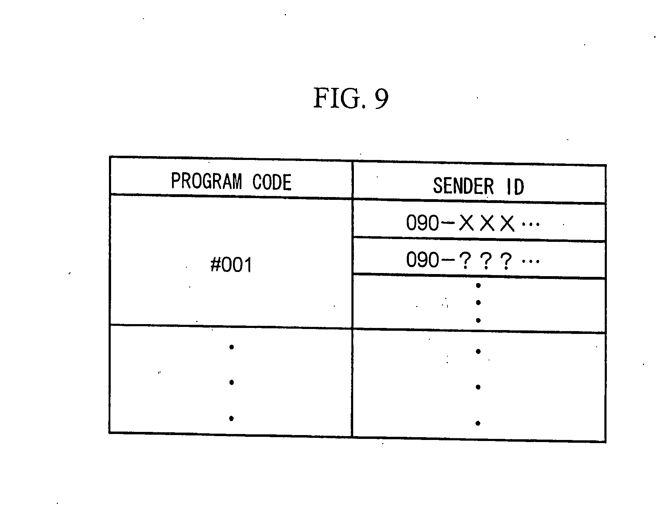

Further, in addition to the program management table TBL3, the table storage unit 36 stores a participant management table TBL4 shown in FIG. 9. As shown in the figure, the participant management table TBL4 is provided with fields for storing the sender IDs of the mobile phones 1 that are used to apply for participation in the program linked with the program codes of the programs.

Here, the program codes stored in the participant management table TBL4 are stored when storing the program codes transmitted from the broadcast management server 21 in the program management table TBL3. Further, for a user of a mobile phone 1 to apply for participation in a program, it is necessary to apply for participation to the TMS 3 before the deadline time for application for participation stored in the program management table TBL3. Therefore, the sender IDs of the mobile phones 1 stored in the program management table TBL3 are only the sender IDs of the mobile phones 1 used for applying for participation before the deadline time for application for participation.

Further, the system control unit 31 prepares an input table TBL5 of the program code of the program in the table storage unit 36 when reaching a time which is a predetermined length before the starting time of broadcast of the program (that is, the time indicated by the program starting time information stored in the program management table TBL3).

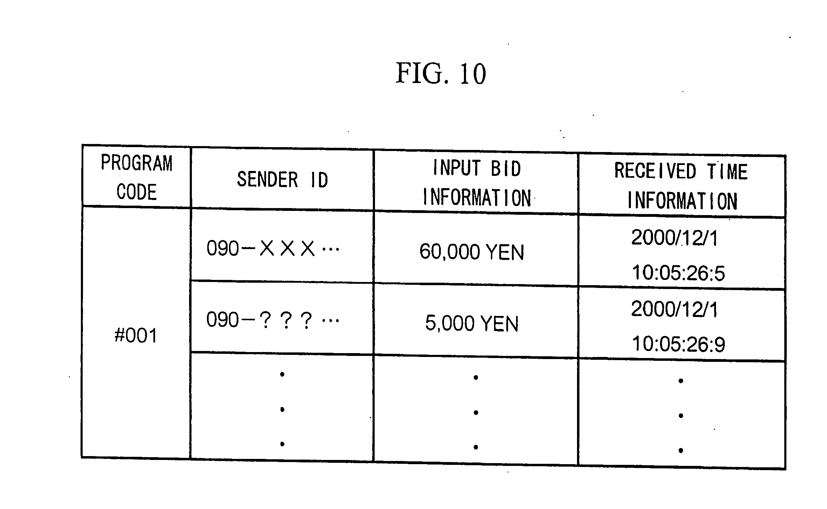

FIG. 10 is a view of the content of the input table TBL5. Note that the input table TBL5 shown in the figure shows a table of the program code "#001". As shown in the figure, the input table TBL5 stores the input bid information transmitted from the mobile phones 1, the sender IDs of the mobile phones 1 that transmitted the input bid information, and the received time information of the input bid information linked together.

As explained above, when input bid information is transmitted from the mobile phones 1, the TMS 3 generates received time information. Further, the system control unit 31 stores the input bid information and the received time information in the input table TBL5 linked with the sender IDs of the mobile phones 1. Further, the input bid information and received time information stored in the input table TBL5 are transmitted at the same time from the system control unit 31 to the broadcast management server 21 and stored in the input table TBL2 in the broadcast management server 21. In other word, the input bid information TBL 5 in the TMS 3 is updated in connection with the input table TBL 2 in the broadcast station 2.

Further, the broadcast management server 21 determines the high input bid for each predetermined time interval based on the input bids stored in the input table TBL2. Further, it updates the report information data to one indicating the high bid and broadcasts it multiplexed with the program data. As a result, a node receiving the broadcast data with this data multiplexed in it displays the current high bid based on this report information data.

Further, the broadcast management server 21 cuts off the acceptance of bids, calculates the winning bid based on the bid information stored in the bid table TBL2, and reads the bid information of the winning bid when reaching time indicated by the bid deadline information stored in the broadcast management table TBL1.

Further, the broadcast management server 21 transmits the bid information and the received time information for the bid information to the TMS 3. The system control unit 31 of the TMS 3 extracts the sender ID of the bid information and received time information transmitted from the broadcast management server 21 from the input table TBL5 and distributes to only the mobile phone 1 of that sender ID the mobile unit broadcast data added with the individual additional data showing that the user of the mobile phone 1 has won the product.

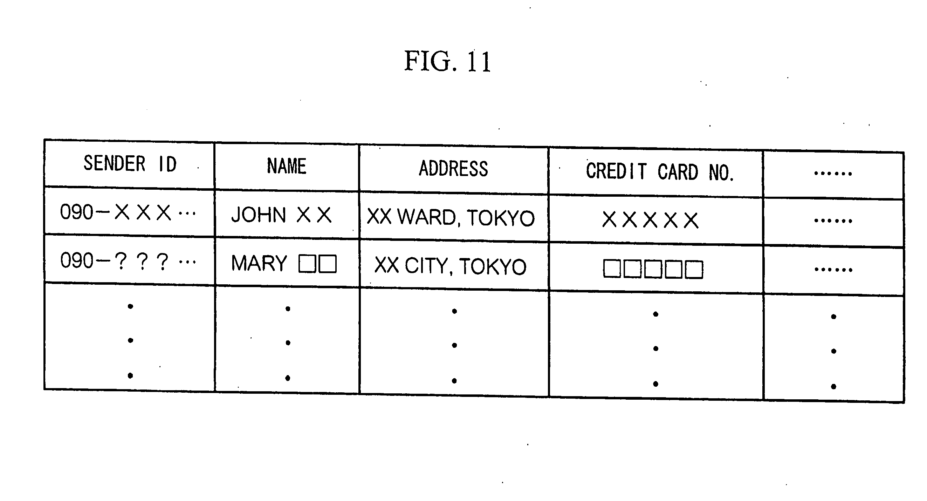

The customer management DB 35 stores the information for managing the users of the mobile phones 1. FIG. 11 shows the stored content of the customer management DB 35. As shown in the figure, the customer management DB 35 stores the names, addresses, credit card numbers, and other information of the users of the mobile phones linked with each sender ID of the mobile phones subscribing to the mobile packet communication network 5 (that is, each user). For example, when the user of a mobile phone 1A wins a product put up for auction, the system control unit 31 distributes individual additional data showing that the product has been won to only that mobile phone 1A. Further, when a credit card number is transmitted from the mobile phone 1A, it reads out the credit card number of the sender ID of the mobile phone 1A from the customer management DB 35. Further, only when the credit card number read out and the credit card number transmitted from the mobile phone 1A match, the system control unit 31 reads out the name and address of the user of that sender ID and transmits that information to the broadcast management server 21. On the other hand, when that information is received, the broadcast management server 21 transmits the credit card number and name to a credit server and reports the name, address, sender ID, and other information to the program production staff of the program to ship out the product.

Note that the customer management DB 35 and the table storage unit 36 are physically stored in the hard disk drive of the system control unit 31 or in a separately provided DB server.

### 1.2 Operation of Embodiment

Next, the operation of the broadcasting system according to the present embodiment will be explained. Note that below, the explanation will be given of the (1-1) operation when starting the broadcast of a program in the broadcast station 2 and the (1-2) operation when receiving a program participation service in that order.

### (1-1) Operation in the Broadcast Station 2 When Starting the Broadcast of a Program

The operation consists of processing performed between the broadcast station 2 and TMS 3 regardless of a request from the mobile phones 1 and is executed when reaching a time which is a predetermined length before the time indicated by the program starting time information stored in the broadcast management table TBL1. Note that in the following explanation, the contents of the program DB 23 and the broadcast management table TBL1 are assumed to be similar to those shown in FIG. 4 and FIG. 5.

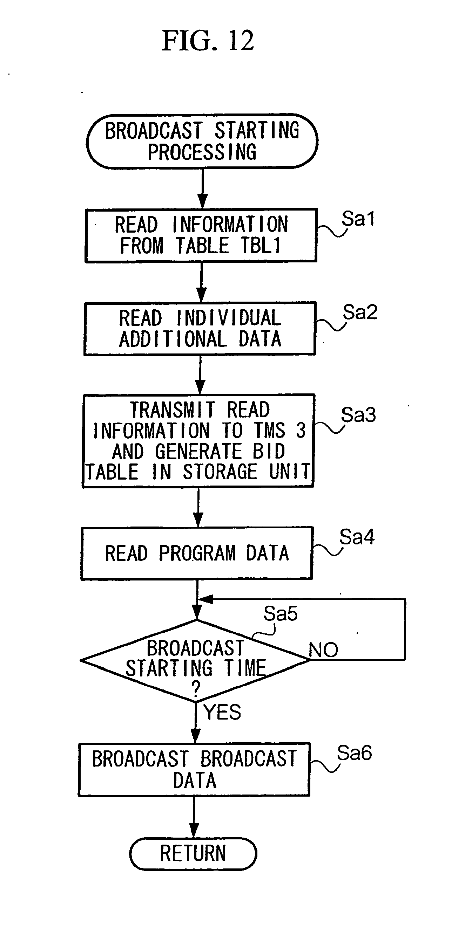

First, the current time reaches a time (for example, "9:58:00, December 1, 2000") which is a predetermined length before the broadcast starting time "10:00:00, December 1, 2000" of the program data of the program code "#001". Then the broadcast management server 21 executes the processing shown in FIG. 12.

The broadcast management server 21 first reads out the program starting time information (that is, "10:00:00, December 1, 2000"), program ending time information (that is, "10:15:00, December 1, 2000"), participation application deadline time information (that is, "10:05:00, December 1, 2000"), and bid deadline time information (that is, "10:12:00, December 1, 2000") stored for the program code "#001" in the broadcast management table TBL1 and stores them in the above-mentioned storage unit of the broadcast management server 21 (step Sa1).

Next, the broadcast management server 21 reads out the individual additional data (that is, the "INDIVIDUAL ADDITIONAL DATA A") associated to the program code "#001" from the program DB 23 and stores it temporarily in the storage unit (step Sa2). Then the broadcast management server 21 reads out the various information and "INDIVIDUAL ADDITIONAL DATA A" stored in the storage unit and transmits it to the TMS 3 (step Sa3). At this time, the broadcast management server 21 prepares a bid table TBL2 for the program code "#001" in the storage unit (step Sa3).

When receiving this information via the communication unit 32, the system control unit 31 of the TMS 3 stores them in the program management table TBL3. That is, the program management table TBL3 stores the program starting time information, program ending time information, participation application deadline time information, bid deadline time information, and "INDIVIDUAL ADDITIONAL DATA A" linked with the program code "#001". As a result, the TMS 3 shares this information (information for the program code "#001") with the broadcast management server 21. Further, when finishing storing the information in the program management table TBL3, the system control unit 31 reads out the program code stored in the program management table TBL3, generates an input table TBL5 of the program code in the table storage unit 36, and stores the program code in the participant management table TBL4.

On the other hand, the broadcast management server 21 reads out the program information of the program code "#001" from the program DB 23 (that is, the "PROGRAM DATA A") and stores it temporarily in the storage unit (step Sa4). At this time, the broadcast management server 21 generates report information data to be multiplexed with the program data such as "PRODUCT: WRISTWATCH (MADE BY CO. XX)" displayed in the report region H in FIG. 2 based on the data for formatting the report information data generated at the terminal 26.

Next, the broadcast management server 21 enters a state for determining if the current time has become the program starting time indicated by the program code "#001" (that is, the time "10:00:00, December 1, 2000" indicated by the program starting time information) (step Sa5). Here, up until the current time reaches the program starting time, the result of determination at step Sa5 becomes "NO", then the determination of the step is repeated.

When the current time reaches the broadcast starting time (that is, "10:00:00, December 1, 2000"), the determination at step Sa5 in the broadcast management server 21 becomes "YES". As a result, the broadcast management server 21 adds the generated report information data and EPG data to the "PROGRAM DATA A" and broadcasts the result as the broadcast data (step Sa6).

Next, when the current time reaches a time which is a predetermined length before the program starting time stored in the broadcast management table TBL1, the above processing is repeated.

### (1-2) Operation When Receiving Program Participation Service

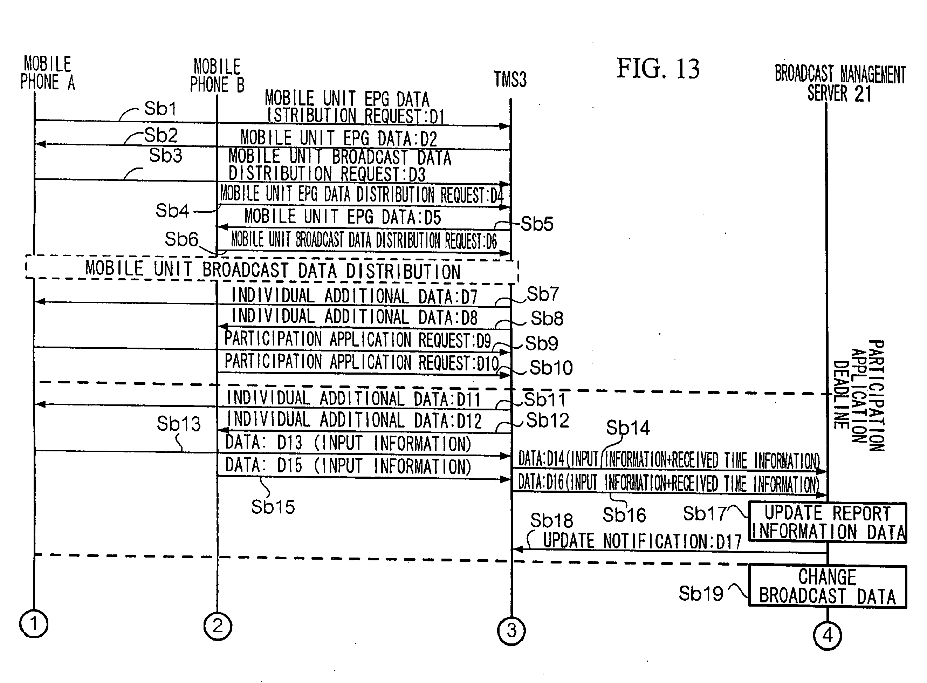

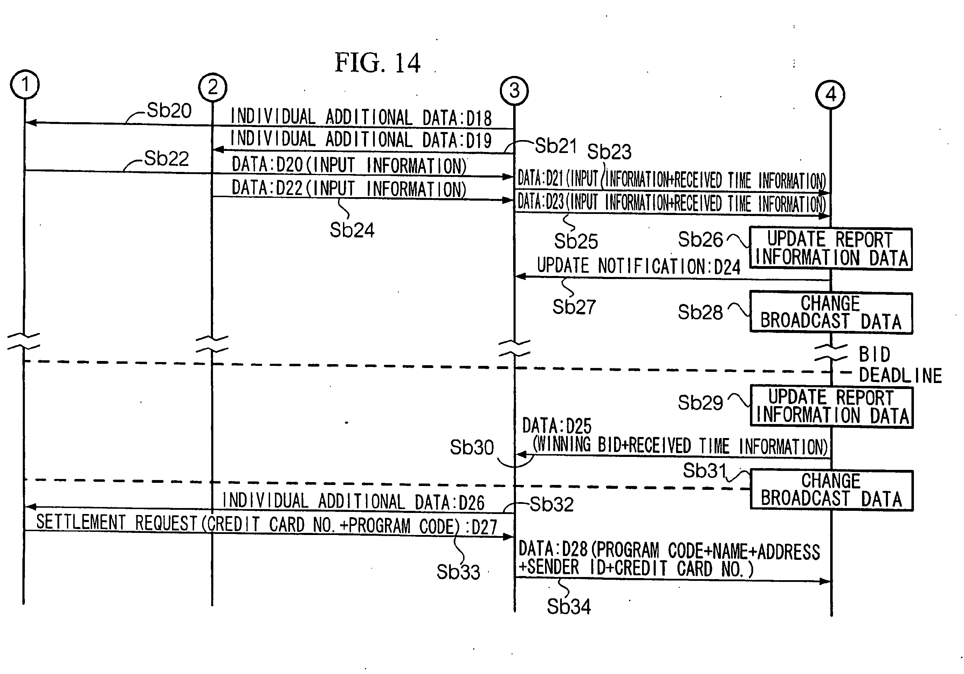

Next, the operation when the user of a mobile phone 1 receives a program participation service will be explained with referring to FIG. 13 and FIG. 14. Note that below, to make the explanation more specific, the explanation will be given assuming that users of the mobile phones 1A (sender ID "090-xxxx-xxxx") and 1B (sender ID "090-????-????") receive the mobile unit broadcast data of the program code "#001" and receive the program participation service. Note that the explanation is predicated on the receiving unit 33 of the TMS 3 successively supplying the broadcast data broadcast by the broadcast station 2 to the system control unit 31.

First, the users turn on the STBs 4 for viewing the program being broadcast at the broadcast station 2 and watch the program. When the users become interested in the program being broadcast and operate the input units of their mobile phones 1 to apply to the TMS 3 for distribution of the program, the mobile phones 1 read the program distribution application and register packets at the mobile packet communication network 5. This registration of packets is a registration for packet exchange of the mobile phones 1 with the mobile packet communication network 5. When packet registration is performed, the mobile phones 1 can exchange packets with the TMS 3.

Next, the mobile phone 1A transmits a distribution request D1 of the mobile unit EPG data to the mobile packet communication network 5 (step Sb1). This distribution request D1 is received by the mobile unit packet communication network I/F unit 34 of the TMS 3 through the mobile packet communication network 5. The system control unit 31 of the TMS 3 distributes the mobile unit EPG data D2 to the mobile phone 1A when receiving this distribution request D1 (step Sb2).

The mobile unit EPG data D2 is received by the mobile phone 1A, whereupon the liquid crystal display of the mobile phone 1A displays an image included in the mobile unit EPG data D2. That is, the liquid crystal display of the mobile phone 1A displays the name of the program being distributed and the program code of the program (that is, "#001"). When the user of the mobile phone 1A operates the input unit to request distribution of the mobile unit broadcast data, the mobile phone 1A extracts the program code "#001" included in the mobile unit EPG data and stores it in the memory. In this way, the program code "#001" stored in the memory is added to all data transmitted subsequently to the TMS 3 from the mobile phone 1A.

Next, the mobile phone 1A transmits the distribution request D3 of the mobile unit broadcast data added with the program code "#001" (step Sb3). When the distribution request D3 is received at the mobile unit packet communication network I/F unit 34 of the TMS 3, the system control unit 31 extracts the program code "#001" and the sender ID "090-xxxx-xxxx" of the mobile phone 1A which originated the distribution request D3 and stores the information in the RAM linked together. When finishing storing the sender ID in the RAM, the system control unit 31 starts the distribution of the mobile unit broadcast data to the mobile phone 1A with the sender ID. As a result, the liquid crystal display of the mobile phone 1A displays an image of the program data and report information data being broadcast from the broadcast station 2.

Similarly, when a distribution request D3 of the mobile unit EPG data is transmitted from the mobile phone 1B (step Sb4), the mobile unit EPG data D4 is transmitted from the TMS 3 (step Sb5). Also, when a distribution request D6 of the mobile unit broadcast data is transmitted from the mobile phone 1B (step Sb6), the system control unit 31 of the TMS 3 enters a state for distributing mobile unit broadcast data to the mobile phone 1B.

Next, the system control unit 31 of the TMS 3 reads out individual additional data stored in the program management table TBL3 at a predetermined timing and distributes the individual additional data D7 and D8 to the mobile phones 1A and 1B together with the mobile unit broadcast data distributed to the mobile phones 1A and 1B (steps Sb7 and Sb8). These data of individual additional data D7 and D8 are for prompting users of mobile phones 1A and 1B to determine if they will participate in the program. Note that the timing when the system control unit 31 distributes the individual additional data D7 and D8 to the mobile phones 1A and 1B may be any timing. Therefore, it is possible to distribute the individual additional data to the mobile phones 1 at the timing when starting the distribution of the mobile unit broadcast data or distribute it when a predetermined time has elapsed from the start of distribution.

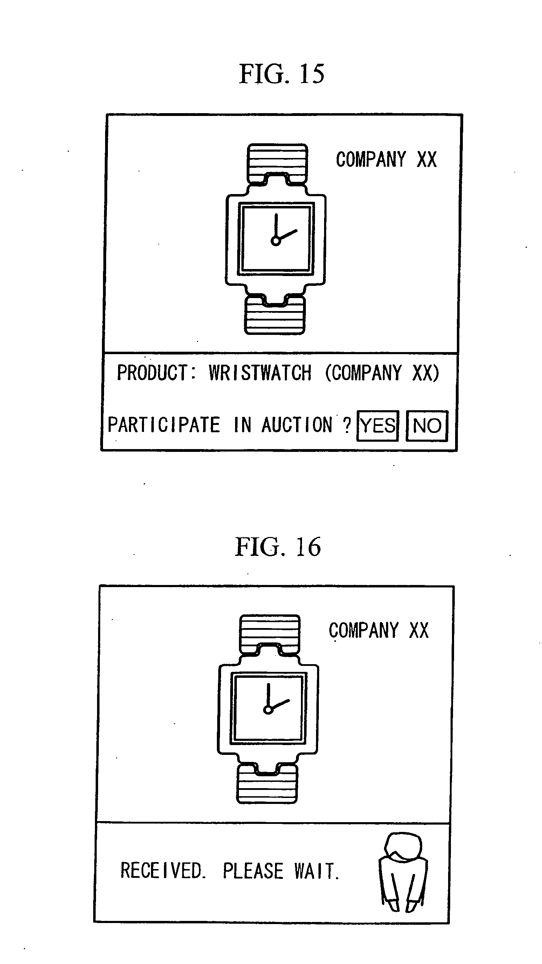

FIG. 15 shows an example of an image displayed on the liquid crystal displays of the mobile phones 1A and 1B receiving the individual additional data D7 and D8. As shown in the figure, the mobile phones 1A and 1B display the text "PARTICIPATE IN AUCTION?" together with an image of the mobile unit broadcast data and display "YES" and "NO" buttons together with this.

In this state, if the users of the mobile phones 1A and 1B operate the input units to select the "YES" buttons, the mobile phones 1A and 1B transmit the participation application requests D9 and D10 added with the program code "#001" to the mobile packet communication network 5 and the mobile phones 1A and 1B change the images displayed on the liquid crystal displays to the ones shown in FIG. 16 in accordance with the individual additional data D7 and D8 (steps Sb9 and Sb10).

Further, the participation application requests D9 and D10 transmitted to the mobile packet communication network 5 are successively received by the mobile packet communication network I/F unit 34 of the TMS 3. Then the system control unit 31 extracts the sender IDs of the originators of the participation application requests D9 and D10 (that is, "090-xxxx-xxxx" and "090-????-????") and the program code "#001". Further, the system control unit 31 stores the sender IDs of the originators in the field of the program code "#001" of the participant management table TBL4. As a result, the content of the participant management table TBL4 becomes the content shown in FIG. 9.

Next, when time elapses and reaches the participation application deadline for the program with the program code "#001" stored in the program management table TBL3, the system control unit 31 of the TMS 3 cuts off applications for participation in the program and no longer accepts requests for application for participation transmitted from the mobile phones 1. Next, the system control unit 31 distributes the individual additional data D11 and D12 together with the mobile unit broadcast data distributed to the mobile phones 1 of the sender IDs stored in the participant management table TBL4 (that is, the mobile phones 1 including at least the mobile phones 1A and 1B) (steps Sb11 and Sb12).

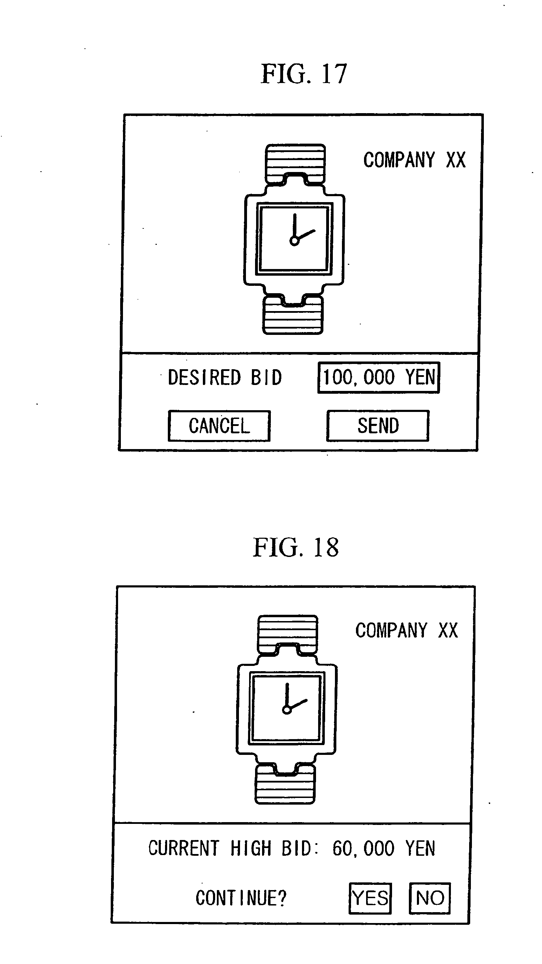

The mobile phones 1A and 1B receiving the individual additional data D11 and D12 change the images displayed on their liquid crystal displays as shown in FIG. 17. That is, the liquid crystal displays of the mobile phones 1A and 1B display boxes for prompting the users of the mobile phones 1A and 1B to input desired bids and "SEND" and "CANCEL" buttons. Here, the "CANCEL" button is a button for canceling the desired bids input by the users. The "SEND" button is a button for transmitting the input bid information of the desired bids input by the users to the TMS 3.

In this state, when the user of the mobile phone 1A operates the input unit to input for example "60,000 yen" as the desired bid and operates the input unit to select the "SEND" button, the mobile phone 1A transmits the data D13 comprised of the input bid information indicating the input bid "60, 000 yen" plus the program code "#001" to the TMS 3 (step Sb13). Further, the mobile phone 1A changes the image of the liquid crystal display to that shown in FIG. 16 in accordance with the individual additional data D11 and D12 when sending the data D13.

When the data D13 transmitted from the mobile phone 1A in this way is received at the mobile packet communication network I/F unit 34 of the TMS 3 at for example "10:05:26.5, December 1, 2000", the system control unit 31 of the TMS 3 generates received time information for that time. Further, the system control unit 31 stores the input bid information, sender ID of the originator of the input bid information, and the generated received time information in the input table TBL5 for the program code "#001". As a result, the input table TBL5 for the program code "#001" stores the sender ID "090-xxxx-xxxx", the input bid information "60,000 yen", and the received time information "10:05:26.5, December 1, 2000". The input bid information and received time information stored in the input table TBL5 in this way are transmitted from the system control unit 31 to the broadcast management server 21 of the broadcast station 2 as the data D14 (step Sb14).

Next, the broadcast management server 21 receives the information transmitted from the TMS 3 and stores it in the bid table TBL2 for the program code "#001". As a result, the input bid information "60,000 yen" and the received time information "10:05:26.5, December 1, 2000" are shared by the TMS 3 and the broadcast management server 21.

The data D15 including the input bid information transmitted from the mobile phone 1B at step Sb15 is similarly stored in the input table TBL5 of the TMS 3. Further, the system control unit 31 of the TMS 3 transmits the input bid information and the received time information as the data D16 to the broadcast management server 21 (step Sb16). The received time information and input bid information transmitted to the broadcast management server 21 in this way are stored in the bid table TBL2 of the broadcast management server 21.

Further, when a predetermined time elapses from the participation application deadline for the program, the broadcast management server 21 searches through the bid information of the bid table TBL2 and reads out the bid information constituting the high bid. The broadcast management server 21 updates the content of the report information data based on the bid information corresponding to the high bid read out in this way (step Sb17). Specifically, the broadcast management server 21 changes the report information data to data of the high bid at the time of updating. For example, when the content of the bid table TBL2 is the content shown in FIG. 6, the high bid at the time of updating is "60,000 yen". In this case, the broadcast management server 21 updates the content of the report information data to information showing that the current bid is "60,000 yen".

When the report information data finishes being updated in this way, the broadcast management server 21 transmits an update notification D17 to the TMS 3 (step Sb18) and starts broadcasting of the broadcast data including the multiplexed updated report information data (step Sb19). Here, the update notification D17 is a signal for reporting to the TMS 3 that the report information data has been updated.

when receiving the update notification D17, the system control unit 31 of the TMS 3 distributes the individual additional data D18 and D19 together with the mobile unit broadcast data distributed to the mobile phones 1 indicated by the sender IDs stored in the participant management table TBL4 (that is, the mobile phones 1 including at least the mobile phones 1A and 1B) (steps Sb20 and Sb21).

The liquid crystal displays of the mobile phones 1A and 1B receiving the individual additional data D18 and D19, as shown in FIG. 18, display text indicating the high bid in the updated report information data, text prompting a decision as to if to continue bidding, and "YES" and "NO" buttons. If operating the input unit to select the "YES" button in this state, the mobile phones 1A and 1B update the images of the liquid crystal displays to that shown in FIG. 17 in accordance with the individual additional data D11 and D12 and display images prompting the users to input desired bids.

Further, when the users operate the input units to input desired bids to the mobile phones 1A and 1B, the mobile phones 1A and 1B transmit data D20 and D22 including the input bid information to the TMS 3 once again (steps Sb22 and Sb24). The system control unit 31 of the TMS 3 transmits the data D21 and D23 including the input bid information and the received time information to the broadcast management server 21 (steps Sb23 and Sb25).

When the predetermined time period has again passed after the preceding update of the report information data, the broadcast management server 21 updates the report information data (step Sb26) and transmits the update notification D24 to the TMS 3 (step Sb27). As a result, the updated report information data is reflected in the content of the broadcast data (step Sb28). In this way, the broadcast management server 21 searches input bid table TBL 2 to read out the highest bid price and update the report information data in a predetermined cycle, Note that the operations of the TMS 3 and the broadcast management server 21 at this time are the same as the operations when the mobile phones 1A and 1B transmit the data D13 and D15 including the input bid information to the TMS 3, so explanations will be omitted.

Next, when similar processing is repeated and reaching a time indicated by the bid deadline information of the program code "#001" stored in the program management table TBL3 (that is, "10:12:00, December 1, 2000"), the system control unit 31 of the TMS 3 cuts off bids from mobile phones 1 and no longer accepts input bid information transmitted from the mobile phones 1. Further, when that time is reached, the broadcast management server 21 reads out the bid information of the high bid from the bid table TBL2 and updates the report information data (step Sb29). At this time, the broadcast management server 21 updates the report information data to the content showing that the product has been won by the bid indicated by the bid information.

Further, the broadcast management server 21 transmits to the TMS 3 the received time information and bid information of the high bid as the data D25 in place of the update notification (step Sb30). In this way, when the data D25 finishes being transmitted, the broadcast management server 21 starts broadcasting of the broadcast data including the multiplexed updated report information data (step Sb31).

On the other hand, the system control unit 31 of the TMS 3 reads the sender ID corresponding to the set of information the same as the set of bid information and received time information transmitted from the broadcast management server 21 in the input table TBL5 and stores it in the RAM. Here, when the read sender ID is "090-xxxx-xxxx", the system control unit 31 distributes the individual additional data D26 along with the mobile unit broadcast data to only the mobile phone 1A (step Sb32).

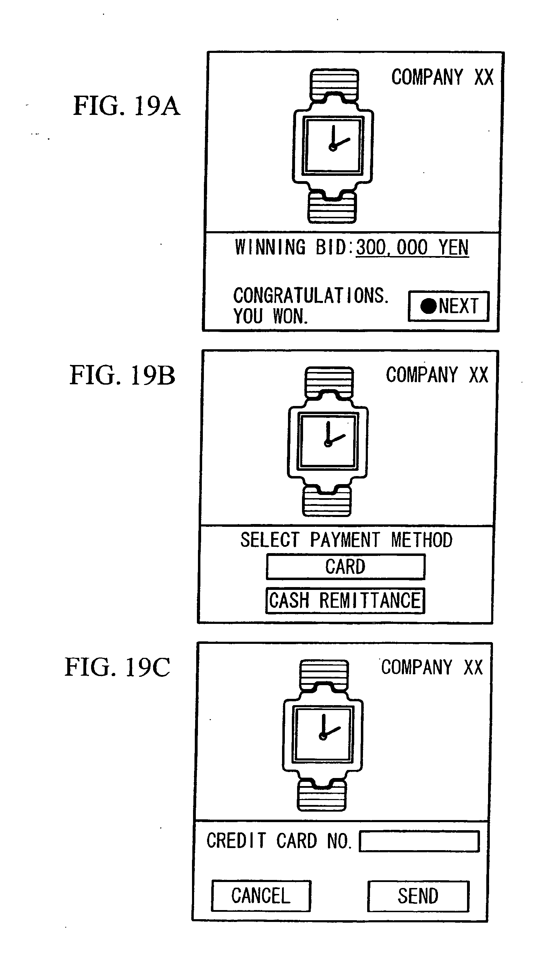

When receiving the mobile unit broadcast data including the added individual additional data D26, the liquid crystal display of the mobile phone 1A shifts in image as shown in FIG. 19. First, when the individual additional data D26 is received, the liquid crystal display of the mobile phone 1A displays an image such as shown in (a). In that state, when the user operates the input unit of the mobile phone 1A to select the "NEXT" button, the image displayed on the liquid crystal display of the mobile phone 1A is changed to that shown in (b). That is, the liquid crystal display of the mobile phone 1A displays buttons for the payment methods which the user may select.

When for example the user operates the input unit to select the "CARD" button in the state with the image shown in (b) displayed, the liquid crystal display of the mobile phone 1A displays the image shown in (c). When the user of the mobile phone 1A operates the input unit to input "xxxxx" as the credit card number and select the "SEND" button, the mobile phone 1A transmits a settlement request D27 including the credit card number "xxxxx" and program code "#001" to the TMS 3 (step Sb33). Note that when the wrong credit card number is entered, it is sufficient to operate the input unit to select the "CANCEL" button.

The system control unit 31 of the TMS 3 searches through the customer management DB 35 using as a search key the sender ID "090-xxxx-xxxx" of the mobile phone 1A that originated the settlement request D27. Further, as a result of the search, it reads out the name "JOHN XX", address "XX WARD, TOKYO", and credit card number "xxxxx" of the user of the mobile phone 1A stored linked with the sender ID. Further, the system control unit 31 determines if the credit card number "xxxxx" read from the customer management DB 35 and the credit card number transmitted added to the settlement request D27 match. When the result of the determination is that the two credit card numbers do not match, the system control unit 31 transmits a settlement failure notification to the mobile phone 1A and the broadcast management server 21 and blocks the conclusion of the transaction.

As opposed to this, in the current case, the credit card number "xxxxx" read from the customer management DB 35 and the credit card number added to the settlement request D27 match. As a result, the system control unit 31 of the TMS 3 transmits the user name "JOHN XX", address "XX WARD, TOKYO", and credit card number "xxxxx" read out from the customer management DB 35 and the sender ID "090-xxxx-xxxx" of the mobile phone 1A and program code "#001" as the data D28 to the broadcast management server 21 (step Sb34).

The broadcast management server 21 receives the data D28 transmitted from the TMS 3, stores the data D28 in its own storage unit, and transmits the name "JOHN XX" and credit card number "xxxxx" of the user of the mobile phone 1A included in the data 28 to the settlement server 6. The settlement server 6 verifies the identity of the user based on the credit card number and name and transmits the result of the verification to the broadcast management server 21. Note that this personal verification process verifies not only if the credit card number and name match, but also if the credit limit of the user in question is sufficient for payment of the product.

When the settlement server 6 verifies the identity of the user as a result of the verification, the broadcast station 2 performs processing for shipping the product to the user. Specifically, when receiving the result of verification from the settlement server 6, the broadcast management server 21 determines the product to be shipped to the user of the mobile phone 1A based on the program code "#001" received from the TMS 3. Further, the broadcast management server 21 conveys the product name to the program production staff in writing or by image etc. and reports the name "JOHN XX" and address "XX WARD, TOKYO" of the destination of the product. Further, the program production staff ships the product based on the name and address.

As opposed to this, when the settlement server 6 finds that the person is not who he or she claims to be or finds that his or her credit limit is not sufficient for payment, the broadcast management server 21 does not execute the processing for shipment of the product and therefore the product does riot end up actually being shipped.

Further, when the user operates the input unit to select "CASH REMITTANCE" as the method of payment in the state with the image of FIG. 19B displayed, the mobile phone 1A transmits to the TMS 3 the data indicating that cash remittance was selected plus the program code "#001", the user name "JOHN XX", address "XX WARD, TOKYO", and sender ID "090-xxxx-xxxx". The system control unit 31 of the TMS 3 transfers the data to the broadcast management server 21, while the broadcast management server 21 determines the product based on the data and reports to the program production staff. Further, the program production staff does not ship out the product until the payment has been remitted from the user of the mobile phone 1A.

In this way, the broadcasting system according to this embodiment is configured to enable participation in a program using mobile phones. Therefore, users of mobile phones can participate in a program at any moment from any place without being constrained by time or location. Further, the broadcasting system according to this embodiment is configured to change not the program data, but the report information data based on the information transmitted from the mobile phones. Therefore, it becomes possible for users of mobile phones to participate in a program without having an impact on the progress of the program itself.

Further, the broadcasting system according to this embodiment is configured so that the extremely highly personal mobile phones are used for participation in a program and so that the verification of the users' identities is also performed using the sender IDs of the mobile phones. Therefore, it is possible to effectively prevent "identity theft" by malicious third parties.

Note that in the present embodiment, the settlement method using the mobile phones 1 was explained assuming the method of settlement by a credit card and the method of settlement by bank remittances. It is however also possible to configure it to settle payments by the method of sending a post office money order or the method of direct debiting from a bank account. Here, when adopting the method of sending a post office money order, it is possible to settle the payment by a routine similar to that of the above bank remittance. As opposed to this, when settling the payment by direct debiting from a bank account, the user of the mobile phone 1 has to conclude an agreement with the bank in which he or she holds an account in advance to enable direct debiting by the broadcasting station, that is, a third party. Further, after concluding the agreement, it is necessary to store the number of the user's bank account in the customer management DB 35 of the TMS 3. When settling the payment, the mobile phone 1 transmits the account number input by the user to the TMS 3. The system control unit 31 of the TMS 3 verifies the identity of the user based on the transmitted account number and sender ID of the mobile phone 1.

Note that the present embodiment is configured so that the system control unit 31 of the TMS 3 verifies the identity based on the sender ID of the mobile phone 1 and the credit card number, but use may be made of any information enabling verification of identity. For example, it is also possible to provide the mobile phones 1 with the function of connecting SIM cards or other user identification modules and use the information stored in the user identification modules to verify identity.

Note that in the present embodiment, the explanation was given of the broadcast station 2 and the settlement server 6 as separate units. It is however also possible to give the broadcast management server 21 functions similar to those of the settlement server 6.

Note that the present embodiment is configured to have mobile phones 1 receive the program participation service, but this may also be received by personal computers having communication functions and other communication devices.

Note that the present embodiment is configured so that the individual additional data is.generated in the terminal 26 of the broadcast station 2 and stored in the program DB 23. It is however also possible to configure it so that the individual additional data is generated in the TMS 3 and stored in the program management table TBL3.

Note that this embodiment is configured so that the broadcast management server 21 determines the winning bid based on the bid table TBL2 and transmits the bid information and received time information of the winning bid to the TMS 3. It is however also possible to configure it so that the system control unit 31 of the TMS 3 determines the winning bid based on the input table TBL5 and transmits the input bid information and received time information of the determined winning bid to the broadcast management server 21.

Note that even when the broadcast management server 21 updates the report information data at predetermined time intervals, the TMS 3 may extract the input bid information of the high bid at that time and transmit it to the broadcast management server 21.

Note that the present embodiment is configured so that the system control unit 31 of the TMS 3 extracts the sender ID of the mobile phone 1 and the credit card number from the settlement request D27 and verifies the identity of the person based on this information and the information stored in the customer management. DB 35 and so that when the identity of the person fails to be verified, the system control unit 31 transmits a settlement failure notification to the mobile phone 1A and the broadcast management server 21 to block the completion of the transaction. It is also possible to configure it, however, so that when the identity of the person fails to be verified in this way, the broadcast station 2 reads out the bid information and received time information of the next highest bid after that winning bid and transmits them to the TMS 3 again and the TMS 3 performs settlement by distributing the individual additional data to the mobile phone 1.

Note that the present embodiment is configured so that the program production staff of the broadcast station 2 ships out the product put up for auction. It is however also possible to configure it so that the product covered by the auction is stored in a warehouse company in advance, the broadcast station 2 transmits the address and other information of the destination to the computer system of the warehouse company after settlement, and the employees of the warehouse company ship out the product.

### 1.3 Modifications

An embodiment of the present invention was explained above, but the above embodiment includes the following modifications.

### <First Modification>

The above embodiment was configured so that the program data included in the broadcast data broadcast from the broadcast station 2 was all recorded before the broadcast of the program of the program data and stored in the program DB 23. That is, in the above embodiment, the programs broadcast from the broadcast station 2 were all pre-recorded programs. The programs however are not limited to pre-recorded programs and may also be live programs.

To provide a similar program participation service in a live program, the broadcast station 2 and the TMS 3 have exactly the same tables (TBL1 to TBL5) as in the above embodiment. In this case, the difference from the configuration of the above embodiment lies in only the stored contents of the program DB 23. That is, in this case, the program DB 23 does not store the program data of the live program, but stores only the program code and the individual additional data. For example, when the stored content of the program DB 23 is the same as the content shown in FIG. 4, if the program of the program code "#001" is a live program, the program DB 23 does not store the "PROGRAM DATA A".

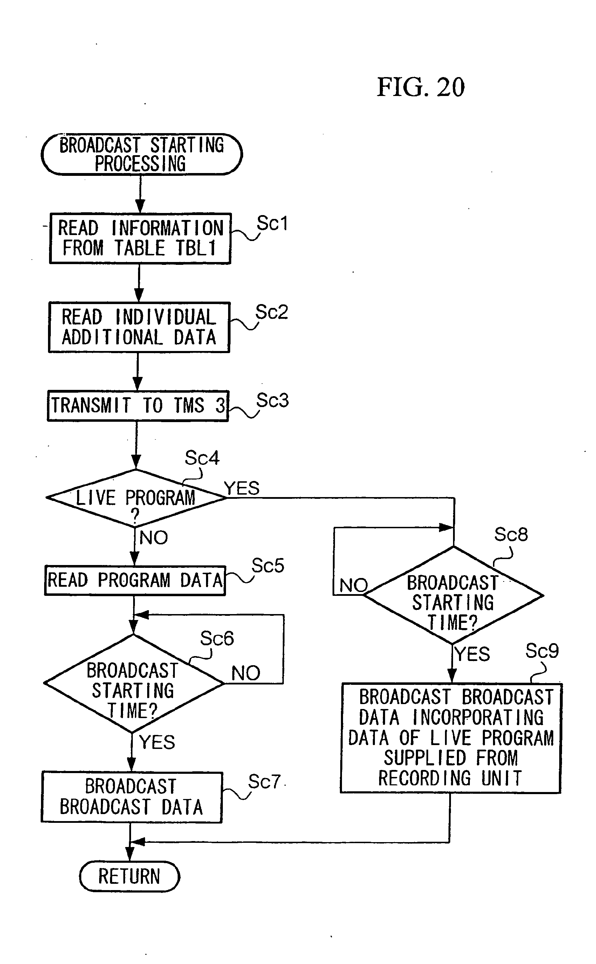

Further, when broadcasting a live program, the broadcast management server 21 of the broadcast station 2 executes the processing shown in FIG. 20.

That is, the broadcast management server 21 reads out the various information from the broadcast management table TBL1 (step Sc1), then reads out the individual additional data of the program code stored in the table (step Sc2) and transmits it to the TMS 3 (step Sc3).

Further, the broadcast management server 21 determines if the program indicated by the program code is a live program (step Sc4). At this time, the broadcast management server 21 determines if the program indicated by the program code is a live program according to whether the program data indicated by the program code has been stored in the program DB 23.

When the result of the determination is that the program is a live program, the broadcast management server 21 determines if the current time has become the program starting time based on the program starting time information read out from the broadcast management table TBL1 (step Sc8). When reaching the program broadcasting time, the broadcast management server 21 broadcasts the broadcast data multiplexed with the program data of the live program currently being recorded at the recording unit 22 (step Sc9). That is, the broadcast management server 21 broadcasts the program data successively supplied from the recording unit 22 multiplexed with the broadcast data.

Further, when users of the mobile phones 1 receive a program participation service after the start of the program, processing similar to that of the above FIG. 13 and FIG. 14 is executed in the broadcasting system. In the case of a live program, however, not only the report information data, but also the content of the program data is changed. For example, if the report information data is updated in FIG. 13, the broadcast management server 21 displays the updated report information data on the screen 25. The director of the program can then move the program forward in accordance with the report information data displayed on the screen 25.

In this way, according to this modification, it becomes possible to realize a viewer participation type program not only in a pre-recorded program, but also in a live program.

### <Second Modification>

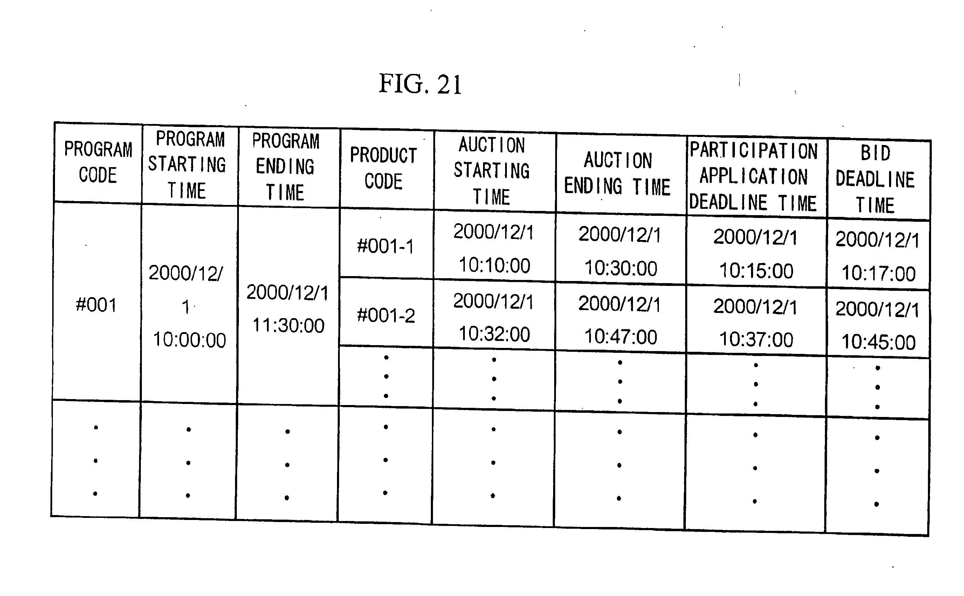

In the above embodiment, one product is put up for auction in one program. However, it is possible to put up a plurality of products for auction in one program. In this case, it is necessary to set a product code for each product put up for auction in the program and change the content of the broadcast management table TBL1 to the content shown in FIG. 21.

As shown in the figure, in this modification, the broadcast management table TBL1 not only stores the program starting time information and program ending time information linked with the program code of each program, but also stores auction starting time information for the product, auction ending time information, participation application time information showing the time in which participation in the auction may be applied for, and bit deadline information linked with the product code of each product put up for auction in the program.

Along with this, the broadcast management table TBL3 of the TMS 3 is additionally given fields for storing auction starting time information, auction ending time information, participation application deadline time information, and bid deadline time information linked with the product codes.

Here, the above embodiment was configured so that the participant management table TBL4 stored the sender IDs of the mobile phones 1 of the participants for each program code and so that the bid table TBL2 and the input table TBL5 were generated for each program code. In this modification, however, these are all linked with product codes.

Further, when starting the broadcast of the program, processing similar to that in FIG. 12 is executed in the broadcast management server 21. As a result, all information stored in the broadcast management table TBL1 is transmitted to the TMS 3 from the broadcast management server 21.

Further, when using the mobile phones 1 to receive the program participation service, the broadcasting system executes processing similar to that in the above FIG. 13 and FIG. 14. At this time, the broadcast management server 21 and TMS 3 cut off applications for participation and bids for each product in accordance with their .own broadcast management table TBL1 and program management table TBL3. Further, at step Sb30 of FIG. 14, the data D25 transmitted by the broadcast management server 21 is additionally given a product code in addition to the bid information and received time information of the winning bid. The system control unit 31 of the TMS 3 in this way reads out the sender ID of the transmitted bid information and received time information from the input table TBL5 and stores it in the RAM linked with the product code.

Further, at step Sb32 of FIG. 14, the system control unit 31 of the TMS 3 adds the product code stored in the RAM to the individual additional data D26, and transmits is to the mobile phone 1 winning the product is transmitted. On the other hand, the mobile phone 1 displays an image for prompting selection of a method of payment based on the individual additional data transmitted from the TMS 3. Further, when the user selects credit as the method of payment and inputs his or her credit card number, the mobile phone 1 transmits the input credit card number and product code to the TMS 3.

Further, at step Sb34, the system control unit 31 of the TMS 3 transmits the product code to the broadcast management server 21 instead of the program code, and the broadcast management server 21 determines the product based on this product code.

### <Third Modification>

The above embodiment was configured so that the broadcast station 2 broadcast only viewer participation type programs. The programs broadcast by a broadcast station 2 however may also include programs other than viewer participation type programs. That is, it is also possible to configure the system to broadcast a drama or other program in which users cannot participate.

In this case, the broadcast management table TBL1 shown in FIG. 5 does not store participation application deadline information and bid deadline information of a program in which users of the mobile phones 1 cannot participate. Further, individual additional data is not required for the program, so the program DB 23 does not store individual additional data linked with the program code.

When starting the broadcast of the program, the broadcast management server 21 performs processing similar to that of the above FIG. 12, but when the various information read out from the broadcast management table TBL1 at step Sa1 does not include participation application deadline information and bid deadline information, the broadcast management server 21 does not generate a bid table TBL2 of the program code at step Sa3. further, when the information transmitted from the broadcast management server 21 does not include participation application deadline time information or bid deadline time information, in the TMS 3 as well, the system control unit 31 does not prepare an input bit table TBL5 and does not generate a field for the program code in the participant management table TBL4. Further, the system control unit 31 of the TMS 3 only distributes the mobile unit broadcast data in response to requests from the mobile phones 1 and does not supply program participation service in response to requests from the mobile phones 1.

The broadcast system of the present invention is for a system for a viewer participation program. However, as described in this modification, it is possible to broadcast a program other than a viewer participation program.

### <Fourth Modification>

In this embodiment, the TMS 3 was configured to receive the broadcast data broadcast from the broadcast station 2 and convert the program data and report information data included in the broadcast data to obtain the mobile unit broadcast data and distribute it to the mobile phones 1. It may also be configured as follows however.

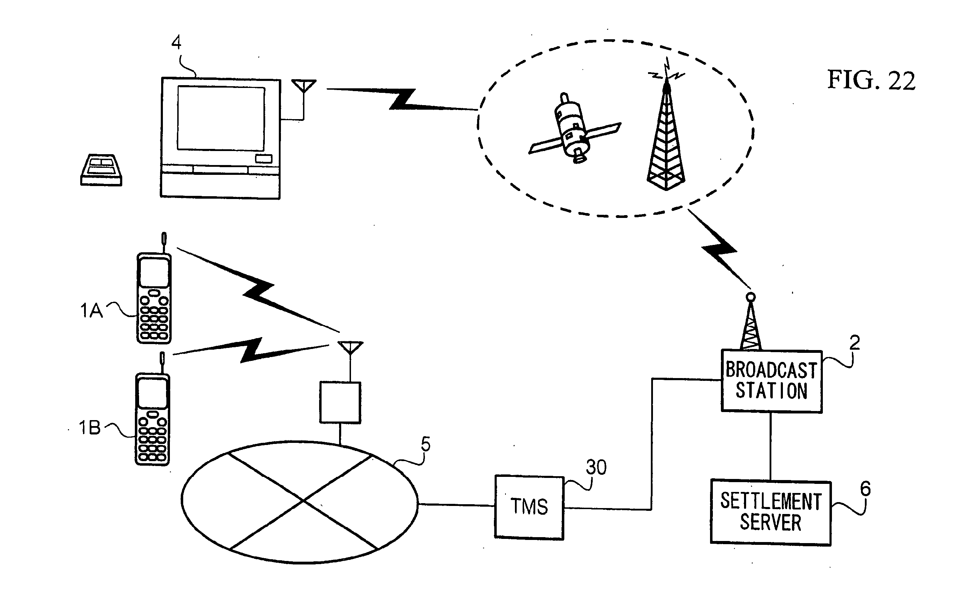

FIG. 22 is a view of the configuration of the broadcasting system according to this modification. Note that facilities in this figure similar to those in the above FIG. 1 are given the same reference numerals.

In this modification, the broadcast management server 21 of the broadcast station 2 transmits data the same as the broadcast data to the TMS 30 through a dedicated line connected with the communication unit 32 of the TMS 30. Here, the broadcast management server 21 starts to transmit the broadcast data to the TMS 30 at the time for starting the broadcast of the broadcast data at step Sa6 of FIG. 12 (that is, the broadcast starting time) .

On the other hand, the system control unit 31 of the TMS 30 converts the broadcast data successively transmitted from the broadcast management server 21 to obtain the mobile unit broadcast data and the mobile unit EPG data. Further, it distributes the mobile unit broadcast data and mobile unit EPG data to the mobile phones 1.

Note that the operation when the users of the mobile phones 1 receive the program participation service is similar to that in the above FIG. 13 and FIG. 14, so explanations will be omitted.

In this way, in the present modification, the TMS 30 can distribute mobile unit broadcast data to the mobile phones without receiving broadcast data broadcast by the broadcast station. Therefore, in this modification, the TMS 30 no longer has to have a receiving unit and the configuration of the TMS can be simplified.

Further, the TMS of this modification can receive broadcast data from the broadcast station through a dedicated line to obtain the mobile unit broadcast data, so it becomes possible to provide the program participation service even to viewers residing where that program is not broadcast.

Note that this modification is configured so that the broadcast data transmitted from the broadcast management server 21 through the dedicated line is received by the TMS 30 and converted to mobile unit broadcast data and mobile unit EPG data. However it is also possible to configure it so that the broadcast management server 21 converts the broadcast data to the mobile unit broadcast data and the mobile unit EPG data and then transmits them to the TMS 30. In this case, the system control unit 31 of the TMS 30 just distributes the mobile unit broadcast data and mobile unit EPG data transmitted from the broadcast management server 21 to the mobile phones 1.

Note that in this modification, the broadcast station 2 and the TMS 30 were explained as being separate, but it is also possible to incorporate the functions of the TMS 30 in the broadcast management server 21 to make them into one device.

Note that this modification is configured so that the broadcast management server 21 and TMS 30 are connected by a dedicated line, but in the same way as the above embodiment, it is also possible for them to communicate through a mobile packet communication network 5 or other public network.

### <Fifth Modification>

The broadcasting system according to the above embodiment enables realization of a viewer participation type auction program by providing users of mobile phones 1 with a program participation service. It is however possible to realize a viewer participation type program no matter what the program so long as it is of a type enabling participation of viewers. For example, a program such as a quiz show falls under this category.

In this case, it is necessary to set a question code for each question and to set fields for storing the participation application deadline time information and the answer deadline information in the broadcast management table TBL1 linked with each question code. More specifically, the content of the broadcast management table TBL1 is configured to replace the product code of the table shown in FIG. 21 with a question code and to store application request deadline information and answer deadline information for each question code. Along with this, the content of the program management table TBL3 of the TMS 3 has to be similarly changed.

Further, in this case, the content of the individual additional data becomes one corresponding to images for prompting the users of the mobile phones 1 to input answers. For example, an image causing a user to select multiple choice answers to a quiz falls under this category.

Further, in this case, there is no need for the broadcast management server 21 to hold a table for the bid table TBL2. The TMS 3 has to hold an answer table for totaling the answers of the users instead of the input table TBL5.. This answer table is comprised of a field for storing answers to the quiz sent in from the mobile phones 1, a field for storing the sender IDs of the mobile phones 1, and a field for storing the received time information of the answers.

When users of the mobile phones 1 participate in the quiz show being broadcast from the broadcast station 2, the system control unit 31 of the TMS 3 receives the answers being transmitted from the mobile phones 1 and stores the answers, received time information, and sender IDs of the mobile phones 1 sending in answers in the answer table. Further, when reaching the time indicated by the answer deadline time information of the question code of each question stored in the program management table TBL3, the system control unit 31 determines the mobile phones 1 of the users giving correct answers to the question of the quiz from the answer table and distributes individual additional data to the extracted mobile phones 1 to the effect of the users having correctly answered the question of the quiz.

Note that at this time, to identify the mobile phones 1 of the users giving correct answers to the question, it becomes necessary to obtain the correct answer to the question from the broadcast station 2. The method for the TMS 3 to obtain the correct answer to a question from the broadcast station 2 may be any method. For example, the broadcast management server 21 may transmit the correct answer at the answer deadline time for each question or the broadcast management server 21 may transmit the correct answers of all questions before the starting time of the broadcast of the program.

When the mobile phones 1 of the users correctly answering a question are identified in this way, the system control unit 31 of the TMS 3 calculates the number of parties giving correct answers and transmits it to the broadcast management server 21. The content of the program is changed based on the number of parties giving correct answers transmitted from the system control unit 31 of the TMS 3 in this way. That is, when the quiz show is a recorded program, the broadcast management server 21 changes the report information data to information showing how many parties gave a correct answer. As opposed to this, when the program is a live program, the broadcast management server 21 changes the displayed content on the screen 25 and the director of the program changes the content of the program.

Note that the processing executed in the broadcast management server 21 when starting the broadcast of the quiz show is similar to that shown in the above FIG. 12 or FIG. 20 and therefore an explanation will be omitted.

In this way, according to the present modification, it becomes possible to provide a program participation service not only in an auction program, but also a quiz show etc.

In this way, according to the present invention, it becomes possible for a large number of widely distributed viewers to participate in a program while maintaining the real time feeling of the program.

## Claims

1. Method of provision of a program, comprising:
obtaining by a server (3) a broadcast data of a viewer participation program from a broadcast station (2);
broadcasting by a broadcast station (2) the broadcast data;
***characterized by***
generating by the server (3) a mobile unit broadcast data from the broadcast data to distribute the mobile unit broadcast data to a plurality of communication terminals (1A, 1B) via a mobile communication network (5);
distributing by the server (3) an input prompting data via the mobile communication network for prompting a user of the communication terminal (1A, 1B) to input information which is for progress of the viewer participation program;
displaying by the communication terminal (1A, 1B) on its display the broadcast data and the input prompting data as an image;
sending by the communication terminal (1A, 1B) to the server (3) an input data that is input in response to the input prompting data;
forwarding by the server (3) that receives the input data these input data to the broadcast station (2);
updating by the server (3) a part of the broadcast data which is to be distributed to the plurality of the communication terminals (1A, 1B) based on the input data; and
updating by the broadcast station (2) the part of the broadcast data to be broadcast based on the input data.

2. Method of provision of a program of claim 1, wherein the broadcast data is recorded before broadcasting.

3. Method of a provision of a program of claim 2, wherein the server (3) obtains a broadcast data broadcast from the broadcast station (2).

4. Method of a provision of a program of claim 2, wherein the server (3) obtains a broadcast data from the broadcast station (2) via a communication line connecting the server (3) and the broadcast station (2).

5. Method of provision of a program of claim 2, the method further comprising,
before the delivery of the input prompting data,
delivering to the plurality of the communication terminal (1A 1B) a participation prompting data for prompting the user of the plurality of the communication terminal (1A, 1B) to participate in the viewer participation program;
prompting by the communication terminal (1A, 1B) the user of the communication terminal (1A, 1B) to participate in the viewer participation program based on the participation prompting data;
sending by the communication terminal (1A, 1B) to the server (3) a participation request input by a user who is prompted to participate in the viewer participation program; and
sending by the server (3) the input prompting data only to the communication terminal that sent the participation request, when sending the input prompting data to the plurality of the communication terminal (1A, 1B).

6. Method of provision of a program of claim 2, wherein the broadcast station (2) starts broadcasting the viewer participation program at a predetermined first time, and
the server (3) accepts receiving an input data before a second time that is after the first time, and does not accept receiving an input data after the second time.

7. Method of provision of a program of claim 5, wherein the broadcast station (2) starts broadcasting the viewer participation program at a predetermined first time; and
the server (3) accepts receiving an input data before a second time that is after the first time, and does not accept receiving an input data after the second time.

8. Method of provision of a program of claim 6, wherein the viewer participation program broadcast by the broadcast station (2) is an auction program;
the input prompting data delivered by the server (3) is a data for prompting the user of the plurality of the communication terminal (1A, 1B) to input a bid; and
the input data sent by the plurality of the communication terminal (1A, 1B) to the server (3) is a bid input by the user.

9. Method of provision of a program of claim 7, wherein the viewer participation program broadcast by the broadcast station (2) is an auction program;
the input prompting data delivered by the server is a data for prompting the user of the plurality of the communication terminal (1A, 1B) to input a bid; and
the input data sent by the plurality of the communication terminal (1A, 1B) to the server (3) is a bid input by the user.

10. Method of provision of a program of claim 8, further comprising,
after the second time,
extracting by the broadcast station (2) a data having the highest bid from the bid sent from the plurality of the communication terminal (1A, 1B);
sending by the broadcast station (2) to the server (3) the data having the highest bid, and
identifying by the server (3) the user of the communication terminal that sent the highest bid based on the data having the highest bid sent from the broadcast station (2), and sending by the server (3) to the communication terminal of this user a winning notification.

11. Method of provision of a program of claim 9, further comprising,
after the second time,
extracting by the broadcast station (2) a data having the highest bid from the bid sent from the plurality of the communication terminal (1A, 1B);
sending by the broadcast station (2) to the server (3) the data having the highest bid; and
identifying by the server (3) the user of the communication terminal that sent the highest bid based on the data having the highest bid sent from the broadcast station (2), and sending by the server (3) to the communication terminal of this user a winning notification.

12. Method of provision of a program of claim 10, further comprising,
after sending the winning notification,
prompting by the communication terminal the user to select the method of paying for the product,
sending by the communication terminal to the server (3) the payment method data selected by the user,
forwarding by the server to the broadcast station (2) the payment method data; and
settling by the broadcast station the payment of the product won by the user based on the payment method data.

13. Method of provision of a program of claim 11, further comprising,
after sending the winning notification,
prompting by the communication terminal the user to select the method of paying for the product,
sending by the communication terminal to the server (3) the payment method data selected by the user,
forwarding by the server (3) to the broadcast station (2) the payment method data; and
settling by the broadcast station the payment of the product won by the user based on the payment method data.

14. Method of provision of a program of claim 12, wherein the server (3) comprises a data base storing information (TBL4) on users of the plurality of the communication terminal; and
the server (3) that receives the payment method data from the communication terminal, based on the payment method data and the information on users stored in the data base, verifies if that user is the correct person, and, only when the user is verified to be the correct person, forwards to the server the payment method data.

15. Method of provision of a program of claim 13, wherein the server (3) comprises a data base storing information (TBL4) on users of the plurality of the communication terminal; and
the server (3) that receives the payment method data from the communication terminal, based on the payment method data and the information on users stored in the data base, verifies if that user is the correct person, and, only when the user is verified to be the correct person, forwards to the server the payment method data.

16. Broadcasting system, where a server (3) obtaining a broadcast data from a broadcast station (2) distributes that broadcast data to a plurality of communication terminals (1A 1B) and where each communication terminal (1A, 1B) executes processing for the broadcast data;
**characterized in that**
the server (3) generates a mobile unit broadcast data from broadcast data to distribute the mobile unit broadcast data to a plurality of communication terminals (1A, 1B) via a mobile communication network;
the server (3) distributes, via the mobile communication network, input prompting data for prompting users' communication terminals (1A, 1B) to input information which is for progress of the viewer participation program on its display's broadcast data and input prompting data as an image;
the communication terminals (1A, 1B) send to the server (B) an input data that is input in response to the input prompting data;
the server (3) forwards the input data to the broadcast station (2); and
the broadcast station (2) updates the part of the broadcast data to be broadcast based on the input data.

17. A server (3) obtaining broadcast data from a broadcast station (2) and distributing it to a plurality of communication terminals (1A, 1B), the server (3) comprising:
a storage unit (35) for storing input prompting data prompting the user of the plurality of communication terminals (1A, 1B) to input information required for progress of the program;
***characterized by***
an input prompting data distributing unit (34) for distributing to the communication terminals (1A, 1B) the input prompting data stored in the storage unit via a mobile communication network (5);
an input data receiving unit (34) for receiving input data returned from the communication terminals (1A, 1B) via the mobile communication network (5) in response to the input prompting data being displayed at displays of the communication terminals; and
an input data transmitting unit (32) for transmitting to the broadcast station (2) input data received by the input data receiving unit.

18. A server of claim 17, further comprising a program receiving unit (33) for receiving the broadcast data from the broadcast station (2) and a program distributing unit (34) for distributing to the plurality of communication terminals (1A, 1B) the broadcast data received by the program receiving unit (33).

19. A server of claim 17, further comprising a communication unit (32) for establishing a communication link with the broadcast station (2) and receiving the broadcast data through the communication link; and
a program distributing unit (34) for distributing to the plurality of communication terminals (1A, 1B) the program received by the communication unit.

20. A server of claim 17, wherein the storage unit (35) stores a plurality of the input prompting data for programs with different contents for each time slot broadcast by the broadcast station (2); and
the input prompting data distributing unit (34) distributes to the communication terminals (1A, 1B) the input prompting data for the program being broadcast by the broadcast station (2) among the input prompting data stored in the storage unit (35).

## Patentansprüche

1. Verfahren zur Bereitstellung eines Programms, umfassend:
Einholen von Aussendungsdaten eines Zuschauerteilnahmeprogramms von einer Rundfunkstation bzw. einem Sender (2) mittels eines Servers (3);
Senden der Aussendungsdaten über einen Sender (2);
**gekennzeichnet durch**
Erzeugen von Aussendungsdaten einer mobilen Einheit aus den Aussendungsdaten mittels des Servers (3), um die Aussendungsdaten der mobilen Einheit an eine Vielzahl von Kommunikationsendgeräten (1A, 1B) über ein mobiles Kommunikationsnetzwerk (5) zu verteilen;
Verteilen von Eingabeabfragedaten über das mobile Kommunikationsnetzwerk mittels des Servers (3) zum Abfragen eines Benutzers des Kommunikationsendgeräts (1A, 1B), um Information für den Fortgang des Zuschauerteilnahmeprogramms einzugeben;
Anzeigen der Aussendungsdaten und der Eingabeabfragedaten mittels des Kommunikationsendgeräts (1A, 1B) auf seiner Anzeigeeinheit als ein Bild;
Senden eines Eingabedatums, das eine Eingabe ist in Antwort auf die Eingabeabfragedaten, an den Server (3) mittels des Kommunikationsendgeräts (1A, 1B);
Weiterleiten dieser Eingabedaten an die Rundfunkstation (2) mittels des Servers (3), der die Eingabedaten empfängt;
Aktualisieren eines Teils der Aussendungsdaten, die an die Vielzahl der Kommunikationsendgeräte (1A, 1B) auf der Grundlage der Eingabedaten mittels des Servers (3) zu verteilen sind; und
Aktualisieren des Teils der auszusendenden Aussendungsdaten auf der Grundlage der Eingabedaten mittels der Rundfunkstation (2).

2. Verfahren zum Bereitstellen eines Programms nach Anspruch 1, wobei die Rundfunkdaten vor dem Aussenden aufgenommen werden.

3. Verfahren zum Bereitstellen eines Programms nach Anspruch 2, wobei der Server (3) ein von der Rundfunkstation (2) gesendetes Aussendungsdatum einholt.

4. Verfahren des Bereitstellens eines Programms nach Anspruch 2, wobei der Server ein Aussendungsdatum über eine den Server (3) und die Rundfunkstation (2) verbindende Kommunikationsleitung einholt von der Rundfunkstation (2) .

5. Verfahren des Bereitstellens eines Programms nach Anspruch 2, das Verfahren ferner umfassend vor der Auslieferung der Eingabeabfragedaten,
Ausliefern an die Vielzahl der Kommunikationsendgeräte (1A, 1B) eines Teilnehmerabfragedatums zum Abfragen der Benutzer der Vielzahl der Kommunikationsendgeräte (1A, 1B) an dem Benutzerteilnahmeprogramm teilzunehmen;
Abfragen der Benutzer des Kommunikationsendgeräts (1A, 1B), um an dem Benutzerteilnahmeprogramm teilzunehmen, auf der Grundlage der Teilnehmerabfragedaten mittels des Kommunikationsendgeräts (1A, 1B);
Senden einer Teilnahmeaufforderungseingabe durch das Kommunikationsendgerät (1A, 1B) an den Server (3) durch einen Benutzer, der abgefragt wird, an dem Benutzerteilnehmerprogramm teilzunehmen; und
Senden der Eingabeabfragedaten mittels des Servers (3) nur an dasjenige Kommunikationsendgerät, das die Teilnehmeranfrage sendet, wenn die Eingabeabfragedaten an die Vielzahl der Kommunikationsendgeräte (1A, 1B) gesendet werden.

6. Verfahren des Bereitstellens eines Programms nach Anspruch 2, wobei die Rundfunkstation (2) das Benutzerteilnahmeprogramm zu einer vorbestimmten ersten Zeit auszusenden beginnt; und
der Server (3) es akzeptiert, vor einer zweiten Zeit, die nach der ersten Zeit ist, ein Eingabedatum zu empfangen und nicht akzeptiert, nach der zweiten Zeit ein Eingabedatum zu empfangen.

7. Verfahren des Bereitstellens eines Programms nach Anspruch 5, wobei die Rundfunkstation (2) das Benutzerteilnahmeprogramm zu einer vorbestimmten ersten Zeit beginnt ausstrahlt; und
der Server (3) es akzeptiert, vor einer zweiten Zeit, die nach der ersten Zeit ist, ein Eingabedatum zu empfangen und es nicht akzeptiert, nach der zweiten Zeit ein Eingabedatum zu empfangen.

8. Verfahren des Bereitstellens eines Programms nach Anspruch 6, wobei das durch die Rundfunkstation (2) ausgesendete Benutzerteilnahmeprogramm ein Auktionsprogramm ist;
die von dem Server (3) ausgelieferten Eingabeabfragedaten ein Datum zum Abfragen der Benutzer der Vielzahl der Kommunikationsendgeräte (1A, 1B) zum Eingeben eines Gebots sind; und
die von der Vielzahl der Kommunikationsendgeräte (1A, 1B) an den Server (3) ausgesendeten Eingabedaten eine Gebotseingabe durch den Benutzer sind.

9. Verfahren des Bereitstellens eines Programms nach Anspruch 7, wobei das von der Rundfunkstation (2) ausgesendete Benutzerteilnahmeprogramm ein Auktionsprogramm ist;
die von dem Server gelieferten Eingabeabfragedaten ein Datum zum Abfragen der Benutzer der Vielzahl der Kommunikationsendgeräte (1A, 1B) zur Eingabe eines Angebots sind; und
die von der Vielzahl der Kommunikationsendgeräte (1A, 1B) an den Server (3) ausgesendeten Eingabedaten eine Angebotseingabe durch den Benutzer sind.

10. Verfahren zum Bereitstellen eines Programms nach Anspruch 8, ferner umfassend,
nach der zweiten Zeit,
Extrahieren durch die Rundfunkstation (2) aus dem Gebot, das von der Vielzahl der Kommunikationsendgeräte (1A, 1B) das höchste Gebot aufweist, eines Datums, das das höchste Gebot aufweist;
Aussenden des Datums mit dem höchsten Gebot durch die Rundfunkstation (2) an den Server (3); und
Identifizieren durch den Server (3) des Benutzers des Kommunikationsendgeräts, das das höchste Gebot gesendet hat auf der Grundlage der Daten, die das von der Rundfunkstation (2) gesendete höchste Gebot aufweist, und Aussenden einer Gewinnbenachrichtigung an das Kommunikationsendgerät dieses Benutzers mittels des Servers (3).

11. Verfahren des Bereitstellens eines Programms nach Anspruch 9, ferner umfassend,
nach der zweiten Zeit,
Extrahieren eines Datums mit dem höchsten Gebot durch die Rundfunkstation (2) aus den von der Vielzahl der Kommunikationsendgeräte (1A, 1B) gesendeten Geboten; Senden der Daten mit dem höchsten Angebot an den Server (3) durch die Rundfunkstation (2); und
Identifizieren desjenigen Benutzers des Kommunikationsendgeräts, das das höchste Gebot gesendet hat, durch den Server (3) auf der Grundlage der Daten, die das von der Rundfunkstation (2) ausgesendete, höchste Gebot aufweist, und Aussenden dieser Gewinnbenachrichtigung für den Benutzer an das Kommunikationsendgerät durch den Server (3).

12. Verfahren des Bereitstellens eines Programms nach Anspruch 10, ferner umfassend,
nach dem Senden der Gewinnbenachrichtigung,
Abfragen des Verfahrens zum Bezahlen des Produkts auszuwählen mittels des Kommunikationsendgeräts des Benutzers;
Senden der von dem Benutzer ausgewählten Daten zum Bezahlungsverfahren an den Server (3) mittels des Kommunikationsendgeräts;
Weiterleiten der Daten zum Bezahlungsverfahren an die Rundfunkstation (2) durch den Server; und
Begleichen der Bezahlung des von dem Benutzer gewonnenen Produkts durch die Rundfunkstation auf der Grundlage der Daten zum Bezahlungsverfahren.

13. Verfahren des Bereitstellens eines Programms nach Anspruch 11, ferner umfassend,
nach dem Aussenden der Gewinnbenachrichtigung
Abfragen des Benutzers durch das Kommunikationsendgerät, das Bezahlverfahren für das Produkt auszuwählen;
Senden der von dem Benutzer ausgewählten Daten zum Bezahlungsverfahren durch das Kommunikationsendgerät an den Server (3);
Weiterleiten der Daten zum Bezahlungsverfahren an die Rundfunkstation (2) durch den Server (3); und
Begleichen der Bezahlung des von dem Benutzer gewonnenen Produkts durch die Rundfunkstation auf der Grundlage der Daten zum Bezahlungsverfahren.

14. Verfahren des Bereitstellens eines Programms nach Anspruch 12, wobei der Server (3) eine Datenbank umfasst, die Information (TBL4) über Benutzer der Vielzahl der Kommunikationsendgeräte umfasst; und
der Server (3), der die Daten zum Bezahlungsverfahren von dem Kommunikationsendgerät empfängt, auf der Grundlage der Daten zum Bezahlungsverfahren und der in der Datenbank gespeicherten Information über Benutzer überprüft, ob dieser Benutzer die richtige Person ist, und der Server nur wenn der Benutzer als die richtige Person überprüft worden ist, die Daten zum Bezahlungsverfahren weiterleitet.

15. Verfahren des Bereitstellens eines Programms nach Anspruch 13, wobei der Server (3) eine Datenbank umfasst, die Information (TBL4) über Benutzer der Vielzahl der Kommunikationsendgeräte speichert; und
der Server (3), der die Daten zum Bezahlungsverfahren von dem Kommunikationsendgerät empfängt, auf der Grundlage der Daten zum Bezahlungsverfahren und der in der Datenbank gespeicherten Information über Benutzer, überprüft, ob dieser Benutzer die korrekte Person ist, und nur wenn der Benutzer als die korrekte Person überprüft worden ist, die Daten zum Bezahlungsverfahren an den Server weiterleitet.

16. Aussendungssystem, wobei ein Server (3) ein Aussendungsdatum von einer Rundfunkstation (2) einholt, diese Aussendungsdaten an eine Vielzahl von Kommunikationsendgeräten (1A, 1B) verteilt und wobei jedes Kommunikationsendgerät (1A, 1B) eine Verarbeitung für die Aussendungsdaten ausführt;
**dadurch gekennzeichnet, dass**
der Server (3) ein Aussendungsdatum für eine mobile Einheit von Aussendungsdaten erzeugt, um die Aussendungsdaten für die mobile Einheit an eine Vielzahl von Kommunikationsendgeräten (1A, 1B) über ein mobiles Kommunikationsnetzwerk zu verteilen;
der Server (3) Eingabeabfragedaten zum Abfragen des Kommunikationsendgeräts (1A, 1B) des Benutzers über das mobile Kommunikati.onsnetzwerk verteilt, zum Eingeben von Information, die für den Fortgang des Benutzerteilnahmeprogramms auf den Aussendungsdaten auf seiner Anzeigeeinheit und Eingabeabfragedaten als ein Bild einzugeben;
wobei die Kommunikationsendgeräte (1A, 1B) dem Server (B) ein in Antwort auf die Eingabeabfragedaten eingegebenes Eingabedatum senden;
der Server (3) die Eingabedaten an die Rundfunkstation (2) weiterleitet; und
die Rundfunkstation (2) den Teil der auf der Grundlage der Eingabedaten auszustrahlenden Aussendungsdaten aktualisiert.

17. Ein Server (3), der Aussendungsdaten von einer Rundfunkstation (2) einholt und diese auf eine Vielzahl von Kommunikationsendgeräten (1A, 1B) verteilt, wobei der Server (3) umfasst:
eine Speichereinheit (35) zum Speichern von Eingabeaufforderungsdaten, die den Benutzer der Vielzahl der Kommunikationsendgeräte (1A, 1B) abfragt, Informationen, die für den Fortgang des Programms benötigt werden, einzugeben;
**gekennzeichnet durch**
eine Verteilungseinheit (34) für Eingabeabfragedaten zum Verteilen der in der Speichereinheit gespeicherten Eingabeabfragedaten an die Kommunikationsendgeräte (1A, 1B) über ein mobiles Kommunikationsnetzwerk (5);
eine Empfangseinheit (34) für Eingabedaten zum Empfangen von Eingabedaten, die von dem Kommunikationsendgerät (1A, 1B) über das mobile Netzwerk (5) in Antwort auf die auf Anzeigegeräten des Kommunikationsendgeräts angezeigten Eingabeabfragedaten; und
eine Übertragungseinheit (32) für Eingabedaten zum Übertragen eines von der Eingabedatenempfangseinheit empfangenen Eingabedatums an die Rundfunkstation (2).

18. Ein Server nach Anspruch 17, ferner umfassend eine Programmaufnahmeeinheit (33) zum Aufnehmen der Ausstrahlungsdaten von der Rundfunkstation (2) und eine Programmverteilungseinheit (34) zum Verteilen an die Vielzahl der Kommunikationsendgeräte (1A, 1B) der von der Programmaufnahmeeinheit (33) empfangenen Aussendungsdaten.

19. Ein Server nach Anspruch 17, ferner umfassend eine Kommunikationseinheit (32) zum Bereithalten eines Kommunikationsverbindungen mit der Rundfunkstation (2) und Empfangen der Rundfunkdaten durch die Kommunikationsverbindung; und
eine Programmverteilungseinheit (34) zum Verteilen des von der Kommunikationseinheit empfangenen Programms an die Vielzahl der Kommunikationsendgeräte (1A, 1B).

20. Ein Server nach Anspruch 17, wobei die Speichereinheit (35) eine Vielzahl der Eingabeabfragedaten für ein Programm mit verschiedenen Inhalten für jedes von der Rundfunkstation (2) ausgesendetes Zeitfenster speichert; und
wobei die Verteilungseinheit (34) für die Eingabeabfragedaten die Eingabeabfragedaten für das von der Rundfunkstation (2) gerade ausgesendete Programm unter den in der Speichereinheit (35) gespeicherten Eingabeabfragedaten an die Kommunikationsendgeräte (1A, 1B) verteilt.

## Revendications

1. Procédé de fourniture d'un programme, comprenant les étapes consistant à:
obtenir, par un serveur (3), des données de diffusion d'un programme à participation de téléspectateur, provenant d'une station de diffusion (2) ;
diffuser, par une station de diffusion (2), les données de diffusion ;
**caractérisé par** les étapes consistant à
produire, par le serveur (3), des données de diffusion d'unités mobiles, à partir des données de diffusion, pour distribuer les données de diffusion d'unités mobiles à une pluralité de terminaux de communication (1A, 1B), au moyen d'un réseau de communication mobile (5);
Distribuer, par le serveur (3), des données d'invitation à une entrée, au moyen du réseau de communication mobile, pour inviter un utilisateur du terminal de communication (1A, 1B) à entrer des informations qui a trait à la progression du programme à participation de téléspectateur;
afficher, par le terminal de communication (1A, 1B) les données de diffusion et les données d'invitation à une entrée, sous la forme d'une image sur son écran ;
envoyer, au serveur (3), par le terminal de communication (1A, 1B) des données d'entrée qui sont entrées en réponse aux données d'invitation à une entrée ;
transmettre, par le serveur (3) qui reçoit les données d'entrée, ces données d'entrée à la station de diffusion (2) ;
mettre à jour, par le serveur (3), une partie des données de diffusion qui doivent être distribuées à la pluralité des terminaux de communication (1A, 1B) sur la base des données d'entrée ; et
mettre à jour, par la station de diffusion (2), la partie des données de diffusion qui doivent être diffusées sur la base des données entrées.

2. Procédé de fourniture d'un programme selon la revendication 1, dans lequel les données de diffusion sont enregistrées avant la diffusion.

3. Procédé de fourniture d'un programme selon la revendication 2, dans lequel le serveur (3) obtient des données de diffusion, diffusées par la station de diffusion (2).

4. Procédé de fourniture d'un programme selon la revendication 2, dans lequel le serveur (3) obtient des données de diffusion de la station de diffusion (2), au moyen d'une ligne de communication reliant le serveur (3) et la station de diffusion (2).

5. Procédé de fourniture d'un programme selon la revendication 2, le procédé comprenant en outre les étapes consistant à :
avant la remise des données d'invitation à une entrée,
remettre, à la pluralité des terminaux de communication (1A, 1B), des données d'invitation à une participation pour inviter l'utilisateur de la pluralité des terminaux de communication (1A, 1B) à participer au programme à participation de téléspectateur;
inviter, par le terminal de communication (1A, 1B), l'utilisateur du terminal de communication (1A, 1B) à participer au programme à participation de téléspectateur, sur base des données d'invitation à une participation;
envoyer au serveur (3), par le terminal de communication (1A, 1B), une entrée d'une demande de participation par un utilisateur qui est invité à participer au programme à participation de téléspectateur; et
envoyer, par le serveur (3), les données d'invitation à une entrée uniquement au terminal de communication, qui a envoyé la demande de participation, lors de l'envoi des données d'invitation à une entrée à la pluralité de terminaux de communication (1A, 1B).

6. Procédé de fourniture d'un programme selon la revendication 2, dans lequel la station de diffusion (2) commence à diffuser le programme à participation de téléspectateur à un premier temps prédéterminé ; et
le serveur (3) accepte de recevoir des données d'entrée avant un deuxième temps, qui est situé après le premier temps, et n'accepte pas de recevoir des données d'entrée après le deuxième temps.

7. Procédé de fourniture d'un programme selon la revendication 5, dans lequel la station de diffusion (2) commence a diffuser le programme à participation de téléspectateur à un premier temps prédéterminé ; et
le serveur (3) accepte de recevoir des données d'entrée avant un deuxième temps, qui est situé après le premier temps, et n'accepte pas de recevoir des données d'entrée après le deuxième temps.

8. Procédé de fourniture d'un programme selon la revendication 6, dans lequel le programme à participation de téléspectateur, diffusé par la station de diffusion (2), est un programme de ventes aux enchères;
les données d'invitation à une entrée, remises par le serveur (3), sont des données servant à inviter l'utilisateur de la pluralité des terminaux de communication (1A, 1B) à entrer une offre ; et
les données d'entrée, envoyées par la pluralité des terminaux de communication (1A, 1B) au serveur (3), sont une entrée d'offre par l'utilisateur.

9. Procédé de fourniture d'un programme selon la revendication 7, dans lequel le programme à participation de téléspectateur, diffusé par la station de diffusion (2), est un programme de ventes aux enchères ;
les données d'invitation à une entrée, remises par le serveur, sont des données pour inviter l'utilisateur de la pluralité des terminaux de communication (1A, 1B) à entrer une offre; et
les données d'entrée, envoyées par la pluralité des terminaux de communication (1A, 1B) au serveur (3), sont une offre entrées par l'utilisateur.

10. Procédé de fourniture d'un programme selon la revendication 8, comprenant en outre les étapes consistant à:
après le deuxième temps,
extraire, par la station de diffusion (2), des données ayant l'offre la plus élevée des offres envoyées par la pluralité des terminaux de communication (1A, 1B);
envoyer, au serveur (3) par la station de diffusion (2), les données ayant l'offre la plus élevée; et
identifier, par le serveur (3), l'utilisateur du terminal de communication, qui a envoyé l'offre la plus élevée, sur base des données ayant l'offre la plus élevée envoyées par la station de diffusion (2), et envoyer, par le serveur (3) une notification d'adjudication au terminal de communication de cet utilisateur.

11. Procédé de fourniture d'un programme selon la revendication 9, comprenant en outre les étapes consistant à:
après le deuxième temps,
extraire, par la station de diffusion (2), des données ayant l'offre la plus élevée, des offres envoyées par la pluralité des terminaux de communication (1A, 1B) ;
envoyer, au serveur (3) par la station de diffusion (2), les données ayant l'offre la plus élevée ; et
identifier, par le serveur (3), l'utilisateur du terminal de communication qui a envoyé l'offre la plus élevée, sur base des données ayant l'offre la plus élevée envoyées par la station de diffusion (2), et envoyer, par le serveur, (3) une notification d'adjudication au terminal de communication de cet utilisateur.

12. Procédé de fourniture d'un programme selon la revendication 10, comprenant en outre les étapes consistant à:
après l'envoi de la notification de l'adjudication,
inviter, par le terminal de communication, l'utilisateur à sélectionner le mode de paiement pour le produit ;
envoyer, au serveur (3) par le terminal de communication, les données sur la méthode de paiement sélectionnée par l'utilisateur ;
transmettre, par le serveur, les données sur la méthode de paiement à la station de diffusion (2) ; et
établir, par la station de diffusion, le paiement du produit acquis par l'utilisateur, sur base des données sur la méthode de paiement.

13. Procédé de fourniture d'un programme selon la revendication 11, comprenant en outre les étapes consistant à:
après l'envoi de la notification d'adjudication,
inviter, par le terminal de communication, l'utilisateur à sélectionner la méthode de paiement pour le produit ;
envoyer au serveur (3), par le terminal de communication, les données sur la méthode de paiement sélectionnée par l'utilisateur ;
transmettre, par le serveur (3), les données sur la méthode de paiement à la station de diffusion (2) ; et
établir, par la station de diffusion, le paiement du produit acquis par l'utilisateur, sur base des données sur la méthode de paiement.

14. Procédé de fourniture d'un programme selon la revendication 12, dans lequel le serveur (3) comprend une base de données (TBL4) stockant des informations sur des utilisateurs de la pluralité des terminaux de communication ; et
le serveur (3), qui reçoit les données sur la méthode de paiement du terminal de communication vérifie, sur base des données sur la méthode de paiement et des informations sur des utilisateurs, stockées dans la base de données, si cet utilisateur est la personne correcte et ne transmet les données sur la méthode de paiement, au serveur, que s'il est établi que l'utilisateur est la personne correcte.

15. Procédé de fourniture d'un programme selon la revendication 13, dans lequel le serveur (3) comprend une base de données (TBL4) stockant des informations sur des utilisateurs de la pluralité des terminaux de communication ; et
le serveur (3), qui reçoit les données sur la méthode de paiement du terminal de communication vérifie, sur base des données sur la méthode de paiement et des informations sur des utilisateurs, stockées dans la base de données, si cet utilisateur est la personne correcte et ne transmet, au serveur, les données sur la méthode de paiement que s'il est établi que l'utilisateur est la personne correcte.

16. Système de diffusion, dans lequel un serveur (3) obtenant des données de diffusion d'une station de diffusion (2), distribue ces données de diffusion à une pluralité de terminaux de communication (1A, 1B), et dans lequel chaque terminal de communication (1A, 1B) exécute le traitement pour les données de diffusion,
**caractérisé en ce que**
le serveur (3) génère des données de diffusion pour des unités mobiles, à partir des données de diffusion, pour distribuer les données de diffusion pour des unités mobiles à une pluralité de terminaux de communication (1A, 1B), au moyen d'un réseau de communication mobile ;
le serveur (3) distribue, au moyen du réseau de communication mobile, des données d'invitation à une entrée pour inviter des terminaux de communication d'utilisateurs (1A, 1B) à entrer des informations qui servent à la progression du programme à participation de téléspectateur, et il affiche des données de diffusion et des données d'invitation à une entrée sous la forme d'une image ;
les terminaux de communication (1A, 1B) envoient, au serveur (B), des données d'entrée qui sont entrées en réponse aux données d'invitation à une entrée ;
le serveur (3) transmet les données d'entrée à la station de diffusion (2) ; et
la station de diffusion (2) met à jour la partie des données de diffusion à diffuser sur base des données d'entrée.

17. Serveur (3) obtenant des données de diffusion d'une station de diffusion (2) et les distribuant à une pluralité de terminaux de communication (1A, 1B), le serveur (3) comprenant :
une unité de stockage (35) pour stocker des données d'invitation à une entrée, invitant l'utilisateur de la pluralité de terminaux de communication (1A, 1B) à entrer des informations requises pour la progression du programme ;
**caractérisé par**
une unité de distribution de données d'invitation à une entrée (34) pour distribuer, au moyen d'un réseau de communication mobile (5) , aux terminaux de communication (1A, 1B) les données d'invitation à une entrée, stockées dans l'unité de stockage ;
une unité de réception de données d'entrée (34) pour recevoir, au moyen du réseau de communication mobile (5), des données d'entrée renvoyées par des terminaux de communication (1A, 1B), en réponse aux données d'invitation à une entrée, affichées sur des écrans des terminaux de communication ; et
une unité de transmission de données d'entrée (32) pour transmettre, à la station de diffusion (2), des données d'entrée reçues par l'unité de réception de données d'entrée.

18. Serveur selon la revendication 17, comprenant en outre une unité de réception de programme (33) pour recevoir, de la station de diffusion (2) les données de diffusion, et une unité de distribution de programme (34) pour distribuer, à la pluralité de terminaux de communication (1A, 1B), les données de diffusion reçues par l'unité de réception de programme (33).

19. Serveur selon la revendication 17, comprenant en outre une unité de communication (32) pour établir une liaison de communication avec la station de diffusion (2) et pour recevoir les données de diffusion, par l'intermédiaire de la liaison de communication; et
une unité de distribution de programme (34) pour distribuer, à la pluralité de terminaux de communication (1A, 1B), le programme reçu par l'unité de communication.

20. Serveur selon la revendication 17, dans lequel l'unité de stockage (35) stocke une pluralité des données d'invitation à une entrée pour des programmes ayant des contenus différents, pour chaque tranche de temps diffusée par la station de diffusion (2) ; et
l'unité de distribution de données d'invitation à une entrée (34) distribue, aux terminaux de communication (1A, 1B), les données d'invitation à une entrée pour le programme étant diffusé par la station de diffusion (2), parmi les données d'invitation à une entrée, stockées dans l'unité de stockage (35).
